(19) Europäisches Patentamt / European Patent Office / Office européen des brevets

(11) **EP 4 411 724 A1**

(12) **EUROPEAN PATENT APPLICATION**
published in accordance with Art. 153(4) EPC

(43) Date of publication:
**07.08.2024 Bulletin 2024/32**

(21) Application number: **22876451.0**

(22) Date of filing: **29.09.2022**

(51) International Patent Classification (IPC):
**G10K 11/16** (2006.01)  **B32B 3/14** (2006.01)
**B32B 3/30** (2006.01)  **B60R 13/08** (2006.01)
**E04B 1/82** (2006.01)  **E04B 1/86** (2006.01)
**G10K 11/162** (2006.01)

(52) Cooperative Patent Classification (CPC):
**B32B 3/14; B32B 3/30; B60R 13/08; E04B 1/82; E04B 1/86; G10K 11/16; G10K 11/162**

(86) International application number:
**PCT/JP2022/036444**

(87) International publication number:
**WO 2023/054587 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161875**
**28.03.2022 JP 2022052035**

(71) Applicant: **Mitsubishi Chemical Corporation**
**Chiyoda-ku**
**Tokyo 100-8251 (JP)**

(72) Inventors:
• **NAKAYAMA, Masanari**
**Tokyo 100-8251 (JP)**
• **MATSUOKA, Takeshi**
**Tokyo 100-8251 (JP)**
• **KOSHITOUGE, Haruki**
**Tokyo 100-8251 (JP)**

(74) Representative: **Hoffmann Eitle**
**Patent- und Rechtsanwälte PartmbB**
**Arabellastraße 30**
**81925 München (DE)**

(54) **SOUND-BLOCKING SHEET AND SOUND-BLOCKING STRUCTURE**

(57) Provided is a sound insulation sheet that exhibits a high sound insulation effect beyond the mass law in multiple frequency bands.

The sound insulation sheet is formed to have at least a sheet member, and a convex member A and a convex member B different in shape from each other.

The convex members are arranged so as to obtain at least two peaks in a graph obtained by measuring a sound transmission loss of the sound insulation sheet, with the horizontal axis of a frequency X and the vertical axis of ΔTL (dB) obtained by the following formula (1), and to have at least two of these peaks with a height of 3 dB or more;

$$\Delta TL = TL_1 - TL_2 \qquad (1),$$

wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

[FIG. 1]

**Description**

TECHNICAL FIELD

The present invention relates to a sound insulation sheet and a sound insulation structure.

BACKGROUND ART

Buildings such as apartment buildings, office buildings, and hotels are required to block outdoor noise from automobiles, trains, airplanes, ships or the like, as well as equipment noise and human voices generated inside the buildings, thereby maintaining a quietness suitable for indoor use. Vehicles such as automobiles, trains, airplanes and ships are also required to block wind and engine noise and to reduce indoor noise levels to provide quiet and comfortable spaces for passengers.

Therefore, means have been researched and developed to block the propagation of noise and vibration from the outside to the inside of buildings or from the outside to the inside of vehicles, namely sound insulation means. In recent years, there has been a demand for flexible sound insulation members adaptable even to complex shapes in order to increase the height of buildings, improve the energy efficiency of vehicles, and increase the degree of freedom in designing buildings, vehicles, and their equipment.

Sound insulation members, especially sheet-shaped members, have been conventionally improved in their member structures to improve their sound insulation performance.

For example, there are known methods, such as a method in which a plurality of rigid flat plate materials such as a gypsum board, cement, a steel plate, a glass plate, and a resin plate are used in combination (Patent Literature 1), a method in which a gypsum board or the like is used to form a hollow double wall structure or a hollow triple wall structure (Patent Literature 2), a method in which a flat plate material and a plurality of independent stump-shaped protrusions are used in combination (Patent Literatures 3, 4, and 5), and a method in which a flat plate material, a plurality of independent stump-shaped protrusions, and a sound absorbing material are used in combination (Patent Literature 4).

CITATION LIST

PATENT LITERATURE

Patent Literature 1: Japanese Patent Laid-Open No. 2013-231316
Patent Literature 2: Japanese Patent Laid-Open No. 2017-227109
Patent Literature 3: International Publication No. WO 2017/135409
Patent Literature 4: Japanese Patent Laid-Open No. 2000-265593
Patent Literature 5: Japanese Patent Laid-Open No. 2019-208727

SUMMARY OF THE INVENTION

PROBLEM TO BE SOLVED BY THE INVENTION

In recent years, with the electrification of automobiles, there has been an increasing need for lightweight noise reduction materials that achieve both vehicle weight reduction and in-vehicle quietness. However, there is a trade-off relationship between sound insulation and weight reduction because conventional sound insulation materials, such as those made of iron or rubber, follow the mass law in which the sound insulation effect increases as the weight per area increases.

Among the conventional sound insulation materials, those described in Patent Literature 3 and Patent Literature 5 include cylindrical protrusions arranged in multiple vertical and horizontal rows or linear protrusions arranged in one direction on the surface of a sheet member, and the protrusions and the sheet member vibrate in response to sound incidence, resulting in high sound insulation performance beyond the mass law in a specific frequency band. Artificial structural materials designed to generate vibration or resonance modes in response to sound waves in a targeted frequency band are known as acoustic metamaterials, and are expected to be a cutting-edge acoustic technology that goes beyond the mass law.

However, sound insulation technology based on acoustic metamaterials has a problem in that the sound insulation frequency is single and narrow because it uses vibration or resonance in a specific frequency band, and the application thereof is limited.

In fact, the noise generated by, for example, automobiles and electrical appliances is rarely a single-frequency sound, but a sound that occurs simultaneously in different frequency bands. Therefore, there has been a demand for a novel sound insulation material that can provide sound insulation for multiple frequency bands.

To improve the sound insulation effect in multiple frequency bands, measures such as laminating different acoustic metamaterials, laminating sound insulation materials and sound absorbing materials, and increasing the weight and thickness of the sound insulation materials can be considered, but these measures inevitably result in thicker sound insulation materials, which increase the size and weight of the materials, and thus it has not been possible to meet the demand for noise insulation with a compact and lightweight component.

The present invention has been made in view of the above problems, and an object thereof is to provide a sound insulation sheet that exhibits a high sound insulation effect beyond the mass law in different design frequency bands with a single sheet.

MEANS FOR SOLVING PROBLEM

The present inventors have made intensive studies in order to achieve the object, and as a result, have found that when a sheet-shaped substrate is provided with a structure combining convex members of different shapes, vibration modes effective for sound insulation are exhibited in different frequency bands. The present inventors have also demonstrated that the sound insulation sheet can be used to insulate incident sound in multiple frequency bands, thereby leading to the achievement of the above object.

Specifically, the aspects of the present invention are as follows.

A sound insulation sheet including a sheet member and convex members,

the sound insulation sheet having at least a convex member A and a convex member B different in shape from each other as the convex members,

the sound insulation sheet having two or more convex regions each having the convex member A present on one surface of the sheet member and

two or more convex regions each having the convex member B present on one surface of the sheet member,

wherein at least two peaks are obtained in a graph obtained by measuring a sound transmission loss, with the horizontal axis of a frequency X and the vertical axis of $\Delta$TL (dB) obtained by the following formula (1), and at least two of these peaks each have a height of 3 dB or more;

$$\Delta TL = TL_1 - TL_2 \qquad (1),$$

wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

[2] The sound insulation sheet according to the aspect [1], wherein the convex member A is a line-shaped convex member.

[3] The sound insulation sheet according to the aspect [1] or [2], wherein the convex member B is present in a plurality in each of the convex regions B, and the convex member B is a dot-shaped convex member.

[4] A sound insulation sheet including a sheet member and convex members,

the sound insulation sheet having at least a line-shaped convex member and a plurality of dot-shaped convex members as the convex members,

the sound insulation sheet having two or more convex regions each having the line-shaped convex member present on one surface of the sheet member and

two or more convex regions each having a plurality of the dot-shaped convex members present on one surface of the sheet member.

[5] The sound insulation sheet according to any one of the aspects [2] to [4], having a row structure composed of one or more rows of the dot-shaped convex members arranged in each of the convex regions where a plurality of the dot-shaped convex members are present, wherein a longitudinal direction of the row structure is substantially parallel to a longitudinal direction of a row structure composed of the line-shaped convex member.

[6] The sound insulation sheet according to the aspect [5], wherein the row structure composed of the line-shaped convex member and the row structure composed of the dot-shaped convex members are arranged alternately in a plan view.

[7] The sound insulation sheet according to the aspect [5], wherein the row structure composed of the line-shaped convex member and the row structure composed of the dot-shaped convex members are arranged alternately and at equal intervals in a plan view.

[8] The sound insulation sheet according to any one of the aspects [5] to [7], wherein the dot-shaped convex members in the row structure are arranged at equal intervals.

[9] The sound insulation sheet according to any one of the aspects [2] to [8], having a value calculated by (a total mass of the line-shaped convex members / a mass of the sheet member) of 0.8 or more, a value calculated by (a total mass of the dot-shaped convex members / a mass of the sheet member) of 0.15 or more, and a value calculated by (a total mass of the line-shaped convex members / a total mass of the dot-shaped convex members) of 3.5 or more and 15 or less.

[10] The sound insulation sheet according to any one of the aspects [3] to [9], wherein the dot-shaped convex members are each cylindrical in shape.

[11] The sound insulation sheet according to any one of the aspects [3] to [9], wherein the dot-shaped convex members are each prismatic in shape.

[12] The sound insulation sheet according to the aspect [2] or [4], wherein the convex member B is a line-shaped convex member having a different length from that of the line-shaped convex member A, and a plurality of the convex members B, which are line-shaped convex members, are arranged in series in each of the convex regions where the convex members B are present.

[13] The sound insulation sheet according to any one of the aspects [4] to [12], wherein at least two peaks are obtained in a graph obtained by measuring a sound transmission loss, with the horizontal axis of a frequency X and the vertical axis of $\Delta TL$ (dB) obtained by the following formula (1), and at least two of these peaks each have a height of 3 dB or more;

$$\Delta TL = TL_1 - TL_2 \qquad (1),$$

wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

[14] The sound insulation sheet according to any one of the aspects [1] to [13], wherein the convex members each contain at least one selected from the group consisting of a photo-curable resin and a thermoplastic resin.

[15] A sound insulation sheet including a sheet member and convex members,

the sound insulation sheet having a plurality of line-shaped convex members A and a plurality of convex members B that are different in shape from the line-shaped convex members A as the convex members,
wherein at least one of the line-shaped convex members A is arranged between a plurality of the convex members B, and
at least one of the convex members B is arranged between a plurality of the line-shaped convex members A.

[16] The sound insulation sheet according to the aspect [15], wherein the convex members B are each a convex member having a shape with no sides longer than a length in a longitudinal direction of each of the line-shaped convex members A.

[17] The sound insulation sheet according to the aspect [15] or [16], having a value calculated by (a total mass of the line-shaped convex members A / a mass of the sheet member) of 0.8 or more, and a value calculated by (a total mass of the convex members B / a mass of the sheet member) of 0.15 or more.

[18] The sound insulation sheet according to the aspect [17], wherein the convex members B are each a convex member having a shape with no sides longer than a length in a longitudinal direction of each of the line-shaped convex members A in a plan view.

[19] The sound insulation sheet according to the aspect [18], wherein the convex members B form a plurality of row structures each composed of a plurality of the convex members B linearly aligned, and the row structures are substantially parallel to a longitudinal direction of each of the line-shaped convex members A.

[20] The sound insulation sheet according to the aspect [19], wherein the row structures each composed of a plurality of the convex members B and the line-shaped convex members A are arranged alternately in a plan view.

[21] The sound insulation sheet according to the aspect [20], wherein the convex members B are each a dot-shaped convex member.

[22] The sound insulation sheet according to the aspect [21], having a value calculated by (a total mass of the line-shaped convex members A / a total mass of the dot-shaped convex members B) of 3.2 or more and 15 or less.

[23] The sound insulation sheet according to the aspect [22], having a value calculated by (a total mass of the line-shaped convex members A / a total mass of the dot-shaped convex members B) of 3.5 or more and 15 or less.

[24] The sound insulation sheet according to the aspect [20], wherein the convex members B are each a line-shaped convex member shorter than each of the line-shaped convex members A.

[25] The sound insulation sheet according to the aspect [24], wherein the convex members B form a plurality of row structures each composed of a plurality of the convex members B linearly aligned along the longitudinal direction.

[26] The sound insulation sheet according to the aspect [25],

wherein when the line-shaped convex member A is defined as a "first line-shaped convex member" and the line-shaped convex member B shorter than the line-shaped convex member A is defined as a "second line-shaped convex member",

the sound insulation sheet has a length ratio of the line-shaped convex member B to the line-shaped convex member A, which is calculated by (the first line-shaped convex member) / (the second line-shaped convex member), in a range of 0.1 to 0.99.

[27] A sound insulation structure including the sound insulation sheet according to any one of the aspects [1] to [26] laminated to a sound absorbing material.

EFFECT OF THE INVENTION

The present invention provides a lightweight sound insulation sheet that, despite being a single sheet, exhibits a sound insulation effect beyond the mass law for noise in multiple frequency bands.

BRIEF DESCRIPTION OF DRAWINGS

FIG. 1 is a schematic perspective view of one embodiment of the sound insulation sheet according to one embodiment of the present invention.

FIG. 2 is a schematic perspective view of one embodiment of the sound insulation sheet according to one embodiment of the present invention.

FIG. 3 is a schematic perspective view of one embodiment of the sound insulation sheet according to one embodiment of the present invention.

FIG. 4 is a schematic perspective view of one embodiment of the sound insulation sheet according to one embodiment of the present invention.

FIG. 5 is a schematic perspective view of one embodiment of the sound insulation structure according to one embodiment of the present invention.

FIG. 6 is a schematic perspective view of a sound insulation sheet including only line-shaped convex members.

FIG. 7 is a schematic perspective view of a sound insulation sheet including only dot-shaped convex members.

FIG. 8 is a view showing an example of a step of producing a sound insulation sheet.

FIG. 9 is a view showing an example of a step of producing a sound insulation sheet.

FIG. 10 is a graph showing the relationship between $\Delta$TL of the first peak and the mass ratio of the line-shaped convex members to the sheet member in Examples.

FIG. 11 is a graph showing the relationship between $\Delta$TL of the second peak and the mass ratio of the dot-shaped convex members to the sheet member in Examples.

FIG. 12 is a graph showing the relationship between the absolute value of the difference between $\Delta$TL of the first peak and $\Delta$TL of the second peak and the mass ratio of the line-shaped convex members to the dot-shaped convex members in Examples.

MODE(S) FOR CARRYING OUT THE INVENTION

The following is a detailed description of the present invention. The following description is an example (representative example) of the present invention, and the present invention is not limited thereto. The present invention may be carried out with any modification within the scope, without departing from the gist thereof.

As used herein, a description expressed by "to" between numbers indicates a range that includes the numbers listed before and after. As used herein, the term "plurality" means two or more.

<Sound Insulation Sheet>

A first sound insulation sheet, which is an embodiment of the present invention, is

a sound insulation sheet including a sheet member and convex members, the sound insulation sheet having at least a convex member A and a convex member B different in shape from each other as the convex members, the sound insulation sheet having two or more convex regions each having the convex member A present on one surface of the sheet member and two or more convex regions each having the convex member B present on one surface of the sheet member,
wherein at least two peaks are obtained in a graph obtained by measuring a sound transmission loss, with the horizontal axis of a frequency X and the vertical axis of $\Delta$TL (dB) obtained by the formula (1) described below, and at least two of these peaks each have a height of 3 dB or more.

Although the shapes of the convex member A and the convex member B are not particularly limited as long as they are different from each other, it is preferred that one of the convex members (for example, convex member A) is a convex member having a linear shape (line-shaped convex member) from the viewpoint of exhibiting a sound insulation effect in a relatively low frequency band, and that one of the convex members (for example, convex member B) is a convex member having a dot shape (dot-shaped convex member) from the viewpoint of exhibiting a sound insulation effect in a relatively high frequency band, and it is more preferred to have these two types of convex members as the convex members from the viewpoint of exhibiting a high sound insulation effect beyond the mass law in different design frequency bands with a single sheet.

In the case where the convex members include a dot-shaped convex member, for example, where the convex member B is a dot-shaped convex member, the number of dot-shaped convex members in each convex region is not particularly limited, but it is preferred that a plurality of dot-shaped convex members are present from the viewpoint of exhibiting a high sound insulation effect beyond the mass law in different design frequency bands with a single sheet.

Alternatively, one of the convex members may be a line-shaped convex member (hereinafter also referred to as "first line-shaped convex member"), and the other convex member may be a second line-shaped convex member having a shape different from that of the first line-shaped convex member. The length of the second line-shaped convex member can be set shorter than that of the first line-shaped convex member, thereby exhibiting a sound insulation effect in a relatively low frequency band, similar to the embodiment of the line-shaped and dot-shaped convex members described above. The embodiment using these two types of line-shaped convex members may be considered to be an embodiment in which the shape of the dot-shaped convex member is changed from dot-shaped to line-shaped in the embodiment of the line-shaped and dot-shaped convex members described above.

Although the sound insulation sheet may have a convex region having convex members other than the convex member A and the convex member B (hereinafter also referred to as "other convex region"), it is preferred for the sound insulation sheet to have only two types of shapes, particularly only the line-shaped and dot-shaped convex members, from the viewpoint of exhibiting a high sound insulation effect beyond the mass law in different design frequency bands with a single sheet.

In the sound insulation sheet according to the present embodiment, at least two peaks are obtained in a graph obtained by measuring a sound transmission loss of the sound insulation sheet, with the horizontal axis of a frequency X and the vertical axis of $\Delta$TL (dB) obtained by the following formula (1), and in particular, at least two peaks each having a peak height of 3 dB or more are obtained. The $\Delta$TL of 3 dB or more provides sufficient noise reduction.

$$\Delta\text{TL} = \text{TL}_1 - \text{TL}_2 \qquad (1),$$

wherein $\text{TL}_1$ represents a sound transmission loss (dB) of the sound insulation sheet at the frequency X, and $\text{TL}_2$ represents a sound transmission loss (dB) of a flat sheet having no concavo-convex structure and having the same mass as that of the sound insulation sheet and the same area as that of the sheet member at the frequency X.

The details of this property are described below.

A second sound insulation sheet, which is another embodiment of the present invention, is

a sound insulation sheet including a sheet member and convex members, the sound insulation sheet having at least a line-shaped convex member and a plurality of dot-shaped convex members as the convex members, the sound insulation sheet having two or more convex regions each having the line-shaped convex member present on one surface of the sheet member and two or more convex regions each having a plurality of the dot-shaped convex members present on one surface of the sheet member.

The sound insulation sheet according to each of the above embodiments, by having a plurality of convex regions each having convex members different in shape from each other, enables sound to be insulated in multiple frequency bands with a single sound insulation sheet and enables weight reduction and downsizing of sound insulation materials installed as noise control measures to be achieved.

Furthermore, each of the different sound insulation frequencies can be adjusted by changing, for example, the shape or material of the convex members, the distance between the convex members, or the thickness or material of the sheet member.

The following describes in detail a sound insulation sheet having a row structure in which the convex member in the convex region A (convex member A in the first sound insulation sheet) is composed of a line-shaped convex member and the convex member in the convex region B (convex member B in the first sound insulation sheet) is composed of a dot-shaped convex member, and in particular a plurality of dot-shaped convex members are present and arranged in one or more rows.

The following description can be applied to any embodiment of the first and second sound insulation sheets. In this case, the above-mentioned "convex regions where the line-shaped convex member is present" and "convex regions where a plurality of the dot-shaped convex members are present" can be replaced with "line-shaped convex row structure where the line-shaped convex member is present" and "dot-shaped convex row structure where a plurality of the dot-shaped convex members are present", respectively.

Hereinafter, each embodiment of the present invention is described with reference to the drawings. The following embodiments are illustrative for describing the present invention, and the present invention is not intended to be limited to such embodiments only.

In the case of the embodiment having the above-mentioned first line-shaped convex member and the second line-shaped convex member, the conditions for the line-shaped convex member in the description of the following embodiment can be applied to those for the first line-shaped convex member. Meanwhile, unless otherwise specified, the combination of conditions for the line-shaped and dot-shaped convex members in the description of the following embodiment can be applied to those for the second line-shaped convex member.

[Configuration of Sound Insulation Sheet Members]

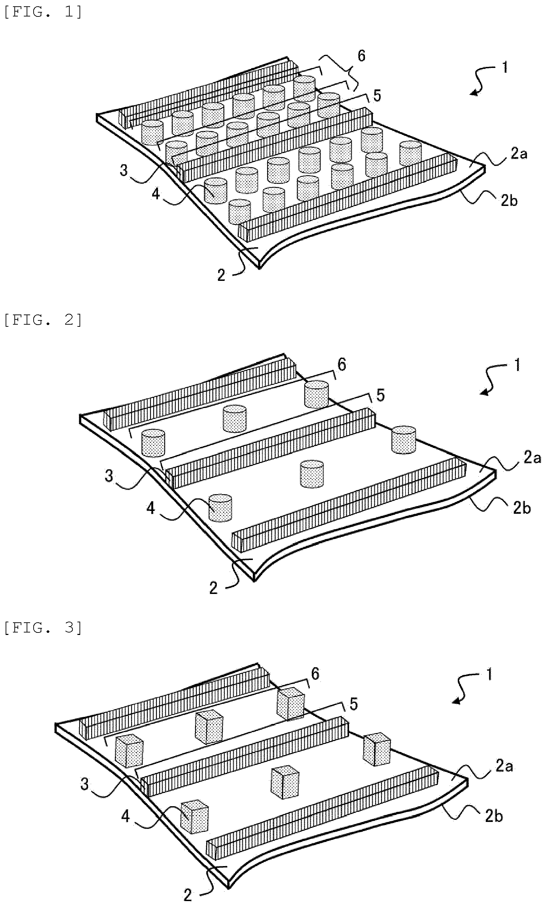

FIGS. 1 to 3 are each a schematic perspective view of a sound insulation sheet 1.

The sound insulation sheet 1 in each of the forms shown in the figures has a shape with a plurality of convex rows of two types of row structures on one surface 2a of a sheet member 2: a row structure (line-shaped convex row structure) 5 composed of a line-shaped convex member 3 extending in one direction, and a row structure (dot-shaped convex row structure) composed of dot-shaped convex members 4 that are scattered on the surface 2a and arranged in one or more rows. In this case, each of the line-shaped convex row structures 5 is one convex region, and each of the dot-shaped convex row structures 6 is one convex region.

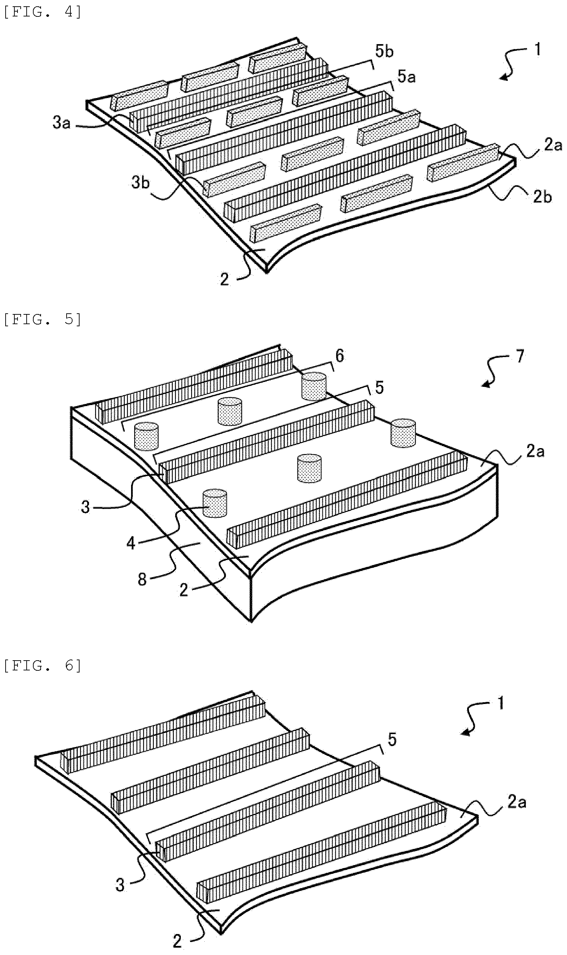

FIG. 4 is a schematic perspective view of a sound insulation sheet 1 having first line-shaped convex members 3a and second line-shaped convex members 3b.

The sound insulation sheet 1 in the form shown in the figure has a shape with a plurality of convex rows of two types of row structures on one surface 2a of a sheet member 2: a first row structure (first line-shaped convex row structure) 5a composed of a first line-shaped convex member 3a extending in one direction, and a second row structure (second line-shaped convex row structure) 5b composed of a plurality of second line convex members 3b arranged in series in each of convex regions where the second line convex members 3b are present.

In this case, each of the line-shaped convex members 3b has a different length from that of the line-shaped convex member 3a. Each first line-shaped convex row structure 5a is one convex region, and each second line-shaped convex row structure 5b is one convex region.

In the sound insulation sheet 1 having first line-shaped convex members 3a and second line-shaped convex members 3b, as shown in FIG. 4, the first line-shaped convex row structures 5a are each composed of one line-shaped convex member 3a, and the second line-shaped convex row structures 5b are each composed of a plurality of line-shaped convex members 3b arranged in series.

(Sheet Member)

The sheet member 2 is used to support line-shaped convex members 3 and dot-shaped convex members 4.

The material constituting the sheet member 2 is not particularly limited as long as it is capable of supporting line-shaped convex members 3 and dot-shaped convex members 4, and may be the same as or different from the material constituting the line-shaped convex members 3 and the dot-shaped convex members 4. Therefore, the conditions for the material constituting the convex members, which are described below, can be applied as the conditions for the material of the entire sound insulation sheet, including not only the convex members but also the sheet member 2.

Specific examples of the material constituting the sheet member 2 include, but are not particularly limited to: organic materials such as polyacrylonitrile, polyethylene terephthalate, polybutylene terephthalate, polyethylene naphthalate, polyvinyl chloride, polyvinylidene chloride, polychlorotrifluoroethylene, polyethylene, polypropylene, polystyrene, cyclic polyolefin, polynorbornene, polyether sulfone, polyether ether ketone, polyphenylene sulfide, polyarylate, polycarbonate, polyamide, polyimide, triacetylcellulose, polystyrene, an epoxy resin, an acrylic resin, and an oxazine resin; metal materials such as aluminum, stainless steel, iron, copper, zinc, and brass; inorganic materials such as inorganic glass; and composite materials containing particles or fibers of the inorganic material in the organic material. Among these, polyethylene terephthalate is preferred from the viewpoint of, for example, sound insulation ability, rigidity, moldability, and cost.

The sheet member 2 may be composed of a single layer, or may be composed of two or more layers. In the case of an embodiment in which two or more layers are laminated, the conditions for the sheet member 2 as used herein are those of a laminate, unless otherwise specified.

The thickness of the sheet member 2 is preferably 30 um or more and 500 um or less, more preferably 35 um or more and 400 um or less, and even more preferably 40 um or more and 300 um or less. When the thickness of the sheet member 2 is the above-mentioned lower limit or more, the handling properties are excellent, and when it is the above-mentioned upper limit or less, the sound insulation performance can be improved by providing line-shaped convex members 3 and dot-shaped convex members 4.

The Young's modulus at 25°C of the sheet member 2 is not limited as long as the sound insulation performance is exhibited, but from the viewpoint of, for example, mechanical strength, flexibility, handling, and productivity, it is preferably 10 MPa or more, and more preferably 500 MPa or more; and preferably 50 GPa or less, and more preferably 20 GPa or less. These preferred conditions for Young's modulus can also be applied as preferred conditions for Young's modulus of convex members described below.

The Young's modulus as used herein refers to the ratio of the force (stress) acting per unit cross-sectional area of a sample to the deformation rate (strain) when an external force is applied in a uniaxial direction, and can be evaluated by measuring the Young's modulus under the following conditions using a dynamic viscoelasticity apparatus DMS6100 (manufactured by Seiko Instruments Inc.), and creating a composite curve from 1 Hz to 10 kHz based on the time-temperature conversion law from the obtained viscoelasticity curve, thereby calculating the Young's modulus at 25°C. For a measurement sample, a strip having a width of 5 mm, a length of 50 mm, and a thickness of 1 mm cut from the sheet member 2, or a strip having a width of 5 mm, a length of 50 mm, and a thickness of 1 mm made from the same material as that of the sheet member 2 can be used. In the case where the materials of the sheet member 2 and the convex members are the same, the value measured as the Young's modulus of the convex members can be used as the Young's modulus of the sheet member 2.

- Measurement mode: tensile
- Measurement temperature: -70°C to 50°C
- Temperature increase rate: 2°C/min
- Measurement frequency: 1 Hz, 10 Hz, 50 Hz

The specific gravity of the sheet member 2 is, but not particularly limited to, usually 0.1 or more, preferably 0.3 or more, and more preferably 0.5 or more; and usually 25 or less, preferably 15 or less, and more preferably 10 or less, from the viewpoint of handling and weight reduction.

The surface density of the sheet member 2 is, but not particularly limited to, usually 0.01 $kg/m^2$ or more, preferably 0.05 $kg/m^2$ or more, and more preferably 0.1 $kg/m^2$ or more; and usually 20 $kg/m^2$ or less, preferably 10 $kg/m^2$ or less, and more preferably 5 $kg/m^2$ or less, from the viewpoint of handling and weight reduction.

The shape of the sheet member 2 is not limited to any of the embodiments shown in FIGS. 1 to 3. The shape can be appropriately set depending on the shape of the surface on which the sound insulation sheet 1 is installed. For example, the shape may be a flat sheet shape, a curved sheet shape, or a special shape that is processed to have, for example, curved or folded portions. In addition, for example, cut or punched portions may also be provided at any position of the sheet member 2 from the viewpoint of, for example, ease of installation and weight reduction.

(Convex Members)

The line-shaped convex members 3 and the dot-shaped convex members 4 provided on the surface of the sheet member 2 serve to impart local (preferably local and periodic) mass to the sheet member 2.

By imparting local mass (preferably periodically), the sheet member 2 functions to excite vibration modes effective for sound insulation corresponding to a sound wave of a target frequency upon incidence of sound waves from a sound source. When the term "convex members" is simply used herein, the description applies to all convex members without distinguishing between line-shaped convex members 3, dot-shaped convex members 4, and other convex members, unless otherwise specified.

The method for forming the line-shaped convex members 3 and the dot-shaped convex members 4 is not particularly limited, and the examples thereof may include: deforming a sheet, such as by deforming a sheet having no convex members by pressing with a mold having a concave-shaped cavity; integrally forming a material different from that of the sheet member 2 with the sheet member 2, such as by pouring a raw material into a mold having a cavity and molding; and adhering separately formed convex members and the sheet member 2 to each other using an adhesive material. Furthermore, the line-shaped convex members 3 and the dot-shaped convex members 4 may be made of different materials or by different methods, respectively.

The line-shaped convex members 3 and the dot-shaped convex members 4 may be formed on one surface 2a of the sheet member 2, or they may be formed on both the one surface (surface of the sheet member 2) 2a and the opposite surface (surface of the sheet member 2) 2b of the sheet member 2. However, it is presumed by the present inventors that they are preferably formed only on one surface 2a of the sheet member 2 from the viewpoint of obtaining a stable sound insulation effect.

The shape of each cross section orthogonal to the longitudinal direction of the line-shaped convex members 3, i.e., the shape of each transverse section of the line-shaped convex members 3 can be substantially a polygon such as a square, a rectangle, or a trapezoid, a semicircle, or a semi-ellipse, but it is not limited to these as long as local (preferably local and periodic) mass can be imparted to the sheet member 2. The shape of each transverse section of the line-shaped convex members 3 can be appropriately selected depending on the application from the viewpoint of, for example, sound insulation performance, production cost, and handling.

The shape of each cross section orthogonal to the longitudinal direction of the row structures of the dot-shaped convex members 4, i.e., the shape of each transverse section of the dot-shaped convex members 4 can be substantially a polygon such as a square, a rectangle, or a trapezoid, a semicircle, or a semi-ellipse, and the entire shape of the dot-shaped convex members 4 can be a prismatic shape such as a triangular prism shape or a quadrangular prism shape, a cylindrical shape, or an elliptical cylindrical shape. Although it is not limited to these as long as local (preferably local and periodic) mass can be imparted to the sheet member 2, it is preferably a prismatic shape or a cylindrical shape from the viewpoint of productivity. The shape of each transverse section of the dot-shaped convex members 4 can be appropriately selected depending on the application from the viewpoint of, for example, sound insulation performance, production cost, and handling.

The ratio of the maximum width in each cross section orthogonal to the longitudinal direction of the line-shaped convex members 3 (the largest possible line segment in the cross section) to the length of the pitch between the line-shaped convex row structures 5, which is (the maximum width/the length of the pitch), is preferably 0.8 or less, more preferably 0.7 or less, even more preferably 0.6 or less, and usually 0.05 or more. The above range enables obtaining a sound insulation sheet 1 with excellent sound insulation performance at multiple sound insulation frequencies by exciting vibration modes effective for sound insulation on the sound insulation sheet 1.

The ratio of the maximum width in each cross section orthogonal to the longitudinal direction of the row structures of the dot-shaped convex members 4 (the largest possible line segment in the cross section) to the length between the center axes of the dot-shaped convex members 4 constituting the dot-shaped convex row structures 6 is preferably 0.8 or less, more preferably 0.7 or less, even more preferably 0.6 or less, and usually 0.1 or more. The above range enables obtaining a sound insulation sheet 1 with excellent sound insulation performance at multiple sound insulation frequencies by exciting vibration modes effective for sound insulation on the sound insulation sheet 1.

The ratio of the maximum width in each cross section orthogonal to the longitudinal direction of the row structures of the dot-shaped convex members 4 (the largest possible line segment in the cross section) to the length of the pitch between the dot-shaped convex row structures 6 is preferably 0.8 or less, more preferably 0.7 or less, even more preferably 0.6 or less, and usually 0.05 or more. The above range enables obtaining a sound insulation sheet 1 with excellent sound insulation performance at multiple sound insulation frequencies by exciting vibration modes effective for sound insulation on the sound insulation sheet 1.

The lengths of each of the line-shaped convex row structures 5 and each of the dot-shaped convex row structures 6 are, but not particularly limited to, each independently usually 30 mm or more, preferably 50 mm or more, and 100 mm or more; and usually 20,000 mm or less, and may be 10,000 mm or less, from the viewpoint of sound insulation effect. These row structures may each be provided independently so as to be present from end to end of the sheet member 2.

In the case of the sound insulation sheet 1 having first line-shaped convex members 3a and second line-shaped convex members 3b as shown in FIG. 4, the length of each of the second line-shaped convex members 3b needs to be half or less of the length of each of the first line-shaped convex members 3a, because at least two or more second line-shaped convex members 3b need to be arranged in series in the longitudinal direction. Specifically, the length of each of the second line-shaped convex members 3b is independently usually 50 mm or more, preferably 100 mm or more, and more preferably 300 mm or more; and usually 1,000 mm or less, preferably 800 mm or less, and more preferably 500 mm or less, from the viewpoint of sound insulation effect. These row structures may each be provided independently so as to be present from end to end of the sheet member 2. As described above, the length of each of the first line-shaped convex members 3a may apply the length condition of the line-shaped convex row structures 5.

The length ratio of each of the second line-shaped convex members 3b to each of the first line-shaped convex members 3a, which is calculated by (the length of each of the first line-shaped convex members 3a) / (the length of each of the second line-shaped convex members 3b), is preferably in a range of 0.1 to 0.99, and more preferably in a range of 0.12 to 0.5. The length ratio of each of the second line-shaped convex members 3b to each of the first line-shaped convex members 3a can be set within the above range, thereby exhibiting three or more sound insulation peaks having a sound insulation intensity beyond the mass law in a low frequency range of 800 Hz or less.

The mass ratio of the entire line-shaped convex members 3 to the sheet member 2, which is calculated by (the total mass of the line-shaped convex members 3 / the mass of the sheet member 2), is preferably 0.8 or more, more preferably 1 or more, and even more preferably 1.5 or more. The upper limit of the mass ratio is not particularly limited, but from the viewpoint of lightweight of the sound insulation sheet 1, for example, it is 20 or less. The mass ratio of the entire line-shaped convex members 3 to the sheet member 2 can be set within the above range, thereby providing the sheet member 2 with sufficient local mass to excite vibration modes effective for sound insulation, and effectively improving the sound insulation performance of the sound insulation sheet 1. The total mass of the line-shaped convex members 3 refers to the sum of all the masses of the plurality of line-shaped convex members 3 present in one sound insulation sheet 1, and the mass of the sheet member 2 refers to the mass of the entire sheet member 2 that constitutes one sound insulation sheet 1.

The mass ratio of the entire convex members B other than the line-shaped convex members 3 to the sheet member 2, which is calculated by (the total mass of the dot-shaped convex members 4 / the mass of the sheet member 2) or (the total mass of the line-shaped convex members (second line-shaped convex members) 3b shorter than the line-shaped convex members 3 / the mass of the sheet member 2), is preferably 0.15 or more, more preferably 0.3 or more, and even more preferably 1 or more. The upper limit of the mass ratio is not particularly limited, but from the viewpoint of lightweight of the sound insulation sheet 1, for example, it is 6 or less. The mass ratio of the entire convex members B other than the line-shaped convex members 3 to the sheet member 2 can be set within the above range, thereby providing the sheet member 2 with sufficient local mass to excite vibration modes effective for sound insulation, and effectively improving the sound insulation performance of the sound insulation sheet 1. The total mass of the dot-shaped convex members 4 refers to the sum of all the masses of the plurality of dot-shaped convex members 4 present in one sound insulation sheet 1, the total mass of the line-shaped convex members (second line-shaped convex members) 3b shorter than the line-shaped convex members 3 refers to the sum of all the masses of the plurality of second line-shaped convex members 3b present in one sound insulation sheet 1, and the mass of the sheet member 2 refers to the mass of the entire sheet member 2 that constitutes one sound insulation sheet 1.

The mass ratio of the entire line-shaped convex members 3 to the entire dot-shaped convex members 4, which is calculated by (the total mass of the line-shaped convex members 3 / the total mass of the dot-shaped convex members 4), is preferably 3.2 or more and 15 or less, more preferably 3.5 or more and 15 or less, and even more preferably 5 or more and 12 or less. The mass ratio of the entire line-shaped convex members 3 to the entire dot-shaped convex members 4 can be set within the above range, thereby obtaining a sound insulation effect beyond the mass law in each of different sound insulation frequency bands. The total mass of the line-shaped convex members 3 refers to the sum of all the masses of the plurality of line-shaped convex members 3 present in one sound insulation sheet 1, and the total mass of the dot-shaped convex members 4 refers to the sum of all the masses of the plurality of dot-shaped convex members 4 present in one sound insulation sheet 1.

The value of (the total mass of the dot-shaped convex members 4 / the mass of the sheet member 2) may apply to the case where the convex members B are the dot-shaped convex members as well as the line-shaped convex members (second line-shaped convex members) shorter than the line-shaped convex members, as described above.

The line-shaped convex row structures 5 and the dot-shaped convex row structures 6 are usually arranged in a plurality on the sound insulation sheet 1, and from the viewpoint of sound insulation effect, these convex rows (longitudinal direction) and the convex row structures (longitudinal direction) are preferably arranged in parallel, i.e., the longitudinal direction of these convex rows is substantially parallel to the longitudinal direction of the convex row structures. The term "substantially parallel" means that even if not perfectly parallel, the degree of tilt within ± 5° is allowed, the degree of tilt within ± 3° may be allowed, and the degree of tilt within ± 1° may be allowed. However, they may be arranged not only in parallel but also at appropriate angles, as long as the sound insulation effect is not impaired and there is no overlap with other convex rows and convex row structures. The rows of the dot-shaped convex members 4 in the convex row structures are usually arranged in a straight line, but may be arranged in a polygonal or curved line as long as the sound insulation effect is not impaired and there is no overlap with the line-shaped convex members 3 or dot-shaped convex members 4 in other convex row structures.

Furthermore, from the viewpoint of sound insulation effect, it is preferred that one dot-shaped convex row structure 6 is arranged between two line-shaped convex row structures 5 and that one line-shaped convex row structure 5 is arranged between two dot-shaped convex row structures 6, it is more preferred that the line-shaped convex row structures 5 and the dot-shaped convex row structures 6 are arranged alternately, and it is even more preferred that they are arranged alternately and at equal intervals, in a plan view. These alternate and alternate and equidistant arrangements may be partially or completely distributed over the entire sound insulation panel 1, and preferably completely. In this case, the arrangement of the convex members in a plan view is the arrangement of the convex members observed without regard to the sheet member 2, i.e., regardless of which side of the sheet member 2 the convex members are arranged. From the same viewpoint, it is even more preferred that the convex members are arranged periodically when observing the convex members of the entire sound insulation sheet 1.

The dot-shaped convex row structures 6 are structures in which the dot-shaped convex members 4 are arranged in one or more rows; and the number of rows constituting each of the row structures 6 (2 in FIG. 1 and 1 in FIG. 2) is, but not particularly limited to, usually 1 or more, may be 2 or more, and may be 3 or more, from the viewpoint of sound insulation effect; and usually 20 or less, preferably 15 or less, more preferably 10 or less, may be 8 or less, may be 5 or less, and particularly preferably 1, from the viewpoint of weight reduction.

As used herein, one dot-shaped convex row structure 6 is a collection of rows of the largest possible dot-shaped convex members 4 without being partitioned by convex members having shapes other than the dot-shaped convex members, such as the line-shaped convex members 3, in a plan view. In other words, in FIG. 1, one dot-shaped convex row structure 6 between two line-shaped convex structures 5 is not treated as if there are two dot-shaped convex row structures 6 each composed of one row, but as if there is one dot-shaped convex row structure 6 composed of two rows. Similarly, one line-shaped convex row structure 5 is also a collection of rows of the largest possible line-shaped convex members 3 without being partitioned by convex members having shapes other than the line-shaped convex members 3, such as the dot-shaped convex members, in a plan view.

The number of dot-shaped convex members in each row constituting each of the dot-shaped convex row structures 6 (6 in FIG. 1 and 3 in FIG. 2) is, but not particularly limited to, usually 2 or more, may be 5 or more, and may be 10 or more, from the viewpoint of sound insulation effect; and usually 100 or less, preferably 80 or less, and more preferably 50 or less, from the viewpoint of weight reduction.

The distance between the dot-shaped convex members 4 constituting each of the dot-shaped convex row structures 6 is not particularly limited, but from the viewpoint of sound insulation effect, it is preferred that they are arranged at equal intervals (periodically).

The number of rows constituting each of the line-shaped convex row structures 5 (1 in both FIG. 1 and FIG. 2) is, but not particularly limited to, usually 1 or more, may be 2 or more, and may be 3 or more, from the viewpoint of sound insulation effect; and usually 20 or less, preferably 15 or less, more preferably 10 or less, may be 8 or less, may be 5 or less, and even more preferably 1, from the viewpoint of weight reduction.

Examples of the type of material included in the line-shaped convex members 3 and the dot-shaped convex members 4 include, but are not particularly limited to, resins and elastomers. Examples of the resins include thermosetting or photo-curable resins and thermoplastic resins; examples of the elastomers include thermosetting or photo-curable elastomers and thermoplastic elastomers.

In addition to resins and elastomers, examples of the materials include metals such as aluminum, stainless steel, iron, tungsten, gold, silver, copper, lead, and zinc; alloys such as brass; inorganic glasses such as soda glass, quartz glass, and lead glass; and composites obtained by adding powders of these metals or alloys or inorganic glasses to resin materials.

Among these materials, one material may be used alone, and two or more materials may be used together in any combination and ratio from the viewpoint of sound insulation performance and production cost. The line-shaped convex members 3 and the dot-shaped convex members 4 may each be a porous body having pores (air or other gases) as long as the sound insulation ability is not deteriorated, or each may not be a porous body.

Examples of the resin included in the line-shaped convex members 3 and the dot-shaped convex members 4 include thermosetting resins such as a phenol resin, an epoxy resin, a urethane resin, and a rosin-modified maleic acid resin; photo-curable resins such as homopolymers or copolymers of monomers such as epoxy (meth)acrylate, urethane (meth)acrylate, polyester (meth)acrylate, polyether (meth)acrylate, and a modified product thereof; and thermoplastic resins such as homopolymers or copolymers of vinyl monomers such as vinyl acetate, vinyl chloride, vinyl alcohol, vinyl butyral, and vinyl pyrrolidone, a saturated polyester resin, a polycarbonate resin, a polyamide resin, a polyolefin resin, a polyarylate resin, a polysulfone resin, a polyphenylene ether resin, and acrylic resins such as homopolymers or copolymers of monomers such as acrylic ester, methacrylic ester, and a modified product thereof.

Among these, from the viewpoint of formability and transparency, at least one selected from the group consisting of photo-curable resins and thermoplastic resins is preferred; acrylic resins, homopolymers of urethane (meth)acrylate, homopolymers of polyester (meth)acrylate or copolymers thereof, or polyether (meth)acrylate resins are more preferred; and acrylic resins or urethane (meth)acrylates are particularly preferred. These can be used singly or as a mixture of two or more types thereof.

Examples of the elastomer included in the line-shaped convex member 3 and the dot-shaped convex member 4 include: thermosetting elastomers such as thermosetting resin elastomers made of vulcanized rubber, urethane rubber, silicone rubber, fluororubber, and acrylic rubber, which are chemically crosslinked natural rubber or synthetic rubber; thermoplastic elastomers such as olefin-based thermoplastic elastomers, styrene-based thermoplastic elastomers, vinyl chloride-based thermoplastic elastomers, urethane-based thermoplastic elastomers, ester-based thermoplastic elastomers, amide-based thermoplastic elastomers, silicone rubber-based thermoplastic elastomers, and acrylic thermoplastic elastomers; photo-curable elastomers such as acrylic photo-curable elastomers, silicone-based photo-curable elastomers, and epoxy-based photo-curable elastomers; and thermosetting elastomers such as silicone-based thermosetting elastomers, acrylic thermosetting elastomers, and epoxy-based thermosetting elastomers.

Among these, silicone-based thermosetting elastomers or acrylic thermosetting elastomers, which are thermosetting elastomers, or acrylic photo-curable elastomers or silicone-based photo-curable elastomers, which are photo-curable elastomers, are preferred. These can be used singly or as a mixture of two or more types thereof.

The photo-curable resin is a resin to be polymerized by light irradiation. Examples thereof include a photo-radical polymerizable resin and a photo-cationic polymerizable resin, and among these, a photo-radical polymerizable resin is preferred.

The photo-radical polymerizable resin preferably has at least one or more (meth)acryloyl group in the molecule. Examples of the photo-radical polymerizable elastomer having one or more (meth)acryloyl group in the molecule include, but are not particularly limited to, monomeric homopolymer or copolymer resins, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-methylbutyl (meth)acrylate, n-pentyl (meth)acrylate, n-hexyl (meth)acrylate, n-heptyl (meth)acrylate, 2-methylhexyl (meth)acrylate, 2-ethylhexyl (meth)acrylate, 2-butylhexyl (meth)acrylate, isooctyl (meth)acrylate, isopentyl (meth)acrylate, isononyl (meth)acrylate, isodecyl (meth)acrylate, isobornyl (meth)acrylate, cyclohexyl (meth)acrylate, benzyl (meth)acrylate, phenoxy (meth)acrylate, n-nonyl (meth)acrylate, n-decyl (meth)acrylate, lauryl (meth)acrylate, hexadecyl (meth)acrylate, stearyl (meth)acrylate, morpholin-4-yl (meth)acrylate, and urethane (meth)acrylate, from the viewpoint of elastic modulus of a cured product.

Among these, a monomeric homopolymer of urethane (meth)acrylate is preferred from the viewpoint of formability and transparency. These can be used singly or as a mixture of two or more types thereof.

The resin included in the line-shaped convex member 3 and the dot-shaped convex member 4 may contain a compound having an ethylenically unsaturated bond.

Examples of the compound having an ethylenically unsaturated bond include: aromatic vinyl monomers such as styrene, α-methylstyrene, α-chlorostyrene, vinyltoluene, and divinylbenzene; vinyl ester monomers such as vinyl acetate, vinyl butyrate, N-vinylformamide, N-vinylacetamide, N-vinyl-2-pyrrolidone, N-vinyl caprolactam, and divinyl adipate; vinyl ethers such as ethyl vinyl ether and phenyl vinyl ether; allyl compounds such as diallyl phthalate, trimethylolpropane diallyl ether, and allyl glycidyl ether; (meth)acrylamides such as (meth)acrylamide, N,N-dimethyl(meth)acrylamide, N-methylol(meth)acrylamide, N-methoxymethyl(meth)acrylamide, N-butoxymethyl(meth)acrylamide, N-t-butyl(meth)acrylamide, (meth)acryloylmorpholine, and methylenebis(meth)acrylamide; mono(meth)acrylates such as (meth)acrylic acid, methyl (meth)acrylate, ethyl (meth)acrylate, propyl (meth)acrylate, n-butyl (meth)acrylate, i-butyl (meth)acrylate, t-butyl (meth)acrylate, hexyl (meth)acrylate, 2-ethylhexyl (meth)acrylate, lauryl (meth)acrylate, stearyl (meth)acrylate, tetrahydrofurfuryl (meth)acrylate, morpholyl (meth)acrylate, 2-hydroxyethyl (meth)acrylate, 2-hydroxypropyl (meth)acrylate, 4-hydroxybutyl (meth)acrylate, glycidyl (meth)acrylate, dimethylaminoethyl (meth)acrylate, diethylaminoethyl (meth)acrylate, benzyl (meth)acrylate, cyclohexyl (meth)acrylate, phenoxyethyl (meth)acrylate, tricyclodecane (meth)acrylate, dicyclopentenyl (meth)acrylate, allyl (meth)acrylate, 2-ethoxyethyl (meth)acrylate, isobornyl (meth)acrylate, and phenyl (meth)acrylate; polyfunctional (meth)acrylates such as ethylene glycol di(meth)acrylate, diethylene glycol di(meth)acrylate, triethylene glycol di(meth)acrylate, tetraethylene glycol di(meth)acrylate, polyethylene glycol di(meth)acrylate (number of repeating units: 5 to 14), propylene glycol di(meth)acrylate, dipropylene glycol di(meth)acrylate, tripropylene glycol di(meth)acrylate, tetrapropylene glycol di(meth)acrylate, polypropylene glycol di(meth)acrylate (number of repeating units: 5 to 14), 1,3-butylene glycol di(meth)acrylate, 1,4-butanediol di(meth)acrylate, polybutylene glycol di(meth)acrylate (number of repeating units: 3 to 16), poly(1-methylbutylene glycol) di(meth)acrylate (number of repeating units: 5 to 20), 1,6-hexanediol di(meth)acrylate, 1,9-nonanediol di(meth)acrylate, neopentyl glycol di(meth)acrylate, hydroxypivalic acid neopentyl glycol di(meth)acrylic acid ester, di(meth)acrylate of dicyclopentanediol, di(meth)acrylic acid ester of caprolactone adduct (n + m = 2 to 5) of hydroxypivalic acid neopentyl glycol, di(meth)acrylic acid ester of γ-butyrolactone adduct (n + m = 2 to 5) of hydroxypivalic acid neopentyl glycol, di(meth)acrylic acid ester of caprolactone adduct (n + m = 2 to 5) of neopentyl glycol, di(meth)acrylic acid ester of caprolactone adduct (n + m = 2 to 5) of butylene glycol, di(meth)acrylic acid ester of caprolactone adduct (n + m = 2 to 5) of cyclohexane dimethanol, di(meth)acrylic acid ester of caprolactone adduct (n + m = 2 to 5) of dicyclopentanediol, di(meth)acrylic acid ester of caprolactone adduct (n + m = 2 to 5) of bisphenol A, di(meth)acrylic acid ester of caprolactone adduct (n + m = 2 to 5) of bisphenol F, di(meth)acrylic acid ester of bisphenol A ethylene oxide adduct (p = 1 to 7), di(meth)acrylic acid ester of bisphenol A propylene oxide adduct (p = 1 to 7), di(meth)acrylic acid ester of bisphenol F ethylene oxide adduct (p = 1 to 7), di(meth)acrylic acid ester of bisphenol F propylene oxide adduct (p = 1 to 7), trimethylolpropane tri(meth)acrylic acid ester, tri(meth)acrylic acid ester of trimethylolpropane ethylene oxide adduct (p = 1 to 5), tri(meth)acrylic acid ester of trimethylolpropane propylene oxide adduct (p = 1 to 5), glycerin tri(meth)acrylic acid ester, tri(meth)acrylic acid ester of glycerin ethylene oxide adduct (p = 1 to 5), ditrimethylolpropane tetra(meth)acrylic acid ester, tetra(meth)acrylic acid ester of ditrimethylolpropane ethylene oxide adduct (p = 1 to 5), pentaerythritol tri(meth)acrylic acid ester, pentaerythritol tetra(meth)acrylic acid ester, tri(meth)acrylic acid ester of pentaerythritol ethylene oxide adduct (p = 1 to 5), tetra(meth)acrylic acid ester of pentaerythritol ethylene oxide adduct (p = 1 to 15), tri(meth)acrylic acid ester of pentaerythritol propylene oxide adduct (p = 1 to 5), tetra(meth)acrylic acid ester of pentaerythritol propylene oxide adduct (p = 1 to 15), penta(meth)acrylic acid ester of dipentaerythritol ethylene oxide adduct (p = 1 to 5), hexa(meth)acrylic acid ester of dipentaerythritol ethylene oxide adduct (p = 1 to 15), tri(meth)acrylic acid ester of poly(meth)acrylate pentaerythritol caprolactone (4 to 8 mol) adduct such as N,N',N"-tris((meth)acryloxy poly(p = 1 to 4)(ethoxy)ethyl)isocyanurate, tetra(meth)acrylic acid ester of pentaerythritol caprolactone (4 to 8 mol) adduct, dipentaerythritol penta(meth)acrylic acid ester, dipentaerythritol hexa(meth)acrylic acid ester, penta(meth)acrylic acid ester of dipentaerythritol caprolactone (4 to 12 mol) adduct, hexa(meth)acrylic acid ester of dipentaerythritol caprolactone (4 to 12 mol) adduct, N,N',N"-tris(acryloxyethyl) isocyanurate, N,N'-bis(acryloxyethyl)-N"-hydroxyethyl isocyanurate, isocyanuric acid ethylene oxide-modified (meth)acrylate, isocyanuric acid propylene oxide-modified (meth)acrylate, and isocyanuric acid ethylene oxide/propylene oxide-modified (meth)acrylate; and epoxy poly(meth)acrylates obtained by addition reaction of polyepoxy compounds each having a plurality of epoxy groups in the molecule, such as bisphenol A glycidyl ether, bisphenol F glycidyl ether, phenol novolac epoxy resin, cresol novolac epoxy resin, pentaerythritol poly glycidyl ether, trimethylolpropane triglycidyl ether, and triglycidyl tris(2-hydroxyethyl) isocyanurate, with (meth)acrylic acid.

Among these, phenoxyethyl acrylate, benzyl acrylate, 2-ethylhexyl (meth)acrylate, and methoxy polyethylene glycol acrylate, each of which is low in elastic modulus of a cured product, are preferred, and 2-ethylhexyl (meth)acrylate and methoxy polyethylene glycol acrylate are more preferred. These can be used singly or as a mixture of two or more types thereof.

Examples of the materials other than resins and/or elastomers that can be contained in or form the line-shaped convex member 3 and the dot-shaped convex member 4 include: metals such as aluminum, stainless steel, iron, copper, and zinc; alloys such as brass, aluminum alloys, and magnesium alloys; metal oxides such as alumina, zirconia, and barium titanate; hydroxides such as hydroxyapatite; carbides such as silicon carbide; carbonates such as calcium carbonate; nitrides such as silicon nitride; halides such as calcium fluoride; ceramics such as glass, cement, and plaster; and composite materials containing particles or fibers of these metals or ceramics in the resins and/or elastomers.

In addition to such inorganic fillers, for example, resin particles such as an acrylic resin, a styrene resin, a silicone resin, a melamine resin, an epoxy resin, and copolymers thereof can also be used in a composite form with the resins and/or elastomers.

These materials can be used singly or as a mixture of two or more types thereof.

When the resin included in the formation of the line-shaped convex member 3 and the dot-shaped convex member 4 includes a photo-curable resin or an elastomer, a photopolymerization initiator is preferably included from the viewpoint of, for example, improving moldability and mechanical strength and reducing production costs, and examples thereof include benzoin-based, acetophenone-based, thioxanthone-based, phosphine oxide-based, and peroxide-based photopolymerization initiators.

Specific examples of the photopolymerization initiator include benzophenone, 4,4-bis(diethylamino)benzophenone, 2,4,6-trimethylbenzophenone, methyl orthobenzoyl benzoate, 4-phenylbenzophenone, t-butylanthraquinone, 2-ethylanthraquinone, diethoxyacetophenone, 2-hydroxy-2-methyl-1-phenylpropan-1-one 2-hydroxy-1-{4-[4-(2-hydroxy-2-methyl-propionyl)-benzyl]phenyl}-2-methyl-propan-1-one, benzil dimethyl ketal, 1-hydroxycyclohexyl-phenylketone, benzoin methyl ether, benzoin ethyl ether, benzoin isopropyl ether, benzoin isobutyl ether, 2-methyl-[4-(methylthio)phenyl]-2-morpholino-1-propanone, 2-benzyl-2-dimethylamino-1-(4-morpholinophenyl)-butanone-1, diethylthioxanthone, isopropylthioxanthone, 2,4,6-trimethylbenzoyldiphenylphosphine oxide, bis(2,6-dimethoxybenzoyl)-2,4,4-trimethylpentylphosphine oxide, bis(2,4,6-trimethylbenzoyl)-phenylphosphine oxide, and methyl benzoyl formate.

Such an initiator may be used as a single material or in any combination of two or more materials at any ratio.

The content of the photopolymerization initiator in the resin included in the formation of the line-shaped convex member 3 and the dot-shaped convex member 4 is, but not particularly limited to, usually 0.1% by mass or more, preferably 0.3% by mass or more, and more preferably 0.5% by mass or more when the mass of the material constituting the line-shaped convex member 3 and the dot-shaped convex member 4 is 100% by mass, from the viewpoint of improving the mechanical strength and maintaining an appropriate reaction rate. In addition, it is usually 3% by mass or less, preferably 2% by mass or less.

The resin included in the line-shaped convex member 3 and the dot-shaped convex member 4 may contain various additives such as a flame retardant, an antioxidant, a plasticizer, a defoaming agent, and a mold release agent as any other component, as long as the sound insulation performance is not inhibited, and such additives can be used singly or in combinations of two or more types thereof.

The flame retardant is an additive that is compounded to a combustible material to make it difficult or impossible to ignite. Specific examples thereof include, but are not particularly limited to: bromine compounds such as pentabromodiphenyl ether, octabromodiphenyl ether, decabromodiphenyl ether, tetrabromobisphenol A, hexabromocyclododecane, and hexabromobenzene; phosphorus compounds such as triphenyl phosphate; chlorine compounds such as chlorinated paraffin; antimony compounds such as antimony trioxide; metal hydroxides such as aluminum hydroxide; nitrogen compounds such as melamine cyanurate; and boron compounds such as sodium borate.

The antioxidant is an additive that is compounded to prevent oxidation degradation. Specific examples thereof include, but are not particularly limited to, a phenolic antioxidant, a sulfur-based antioxidant, and a phosphorus-based antioxidant.

The plasticizer is an additive that is compounded to improve flexibility and weather resistance. Specific examples thereof include, but are not particularly limited to, phthalate ester, adipate ester, trimellitate ester, polyester, phosphate ester, citrate ester, sebacate ester, azelate ester, maleate ester, silicone oil, mineral oil, vegetable oil, and any modified product thereof.

[Method of Molding Sound Insulation Sheet]

The method of molding the sound insulation sheet 1 is not particularly limited, and a commonly known sheet molding method can be adopted. In the case of thermosetting or thermoplastic resins or elastomers, examples of the method include melt molding methods such as press molding, extrusion molding, and injection molding, and the molding conditions such as temperature and pressure for melt molding in this case can be appropriately modified depending on the type of the material used.

In the case of photo-curable resins or elastomers, for example, such a resin or the like can be injected into a plate-shaped mold permeable to active energy rays, and irradiated with an active energy ray to be photo-cured.

The active energy ray as a specified ray of light, for use in curing of the photo-curable resin or the like, may be any one as long as it can cure the photo-curable resin or the like used, and examples include ultraviolet rays and electron beams.

The amount of irradiation with an active energy ray may be any amount that allows the photo-curable resin or the like used to be cured, and the amount of irradiation with, for example, an ultraviolet ray having a wavelength of 200 to 400 nm is usually in the range of 0.1 to 200 J, taking into account the types and amounts of monomer and polymerization initiator.

Examples of the light source for the active energy ray used include a chemical lamp, a xenon lamp, a low-pressure mercury lamp, a high-pressure mercury lamp, and a metal halide lamp. The irradiation with the active energy ray may be performed in one stage, and is preferably performed in several stages, at least in two stages, in order to obtain a photo-curing resin sheet with favorable surface properties. The photo-curable resin, if used, may contain a curing accelerator.

The method of molding the line-shaped convex member 3 and the dot-shaped convex member 4 on the sheet member 2 is not particularly limited, and may be either a method of simultaneously molding the sheet member 2, the line-shaped convex member 3, and the dot-shaped convex member 4 using a mold having a cavity, or a method of molding by combining the sheet member 2 with the line-shaped convex member 3 and the dot-shaped convex member 4.

The method of molding by combining the sheet member 2 with the line-shaped convex member 3 and the dot-shaped convex member 4 is described in detail below, but is not limited to this method.

The method of combining the sheet member 2 with the line-shaped convex member 3 and the dot-shaped convex member 4 is not particularly limited, and may be either a method of forming the line-shaped convex member 3 and the dot-shaped convex member 4 on the sheet member 2, or a method of allowing the line-shaped convex member 3 and the dot-shaped convex member 4 molded to adhere to the sheet member 2. In the case of the adhering method, an adhesive is preferably used, and the type of the adhesive is not limited as long as the adhesive is capable of allowing the line-shaped convex member 3 and the dot-shaped convex member 4 to adhere to the sheet member 2.

Next, an exemplary embodiment relating to a method of molding a sound insulation sheet 1 using a photo-curable resin is described.

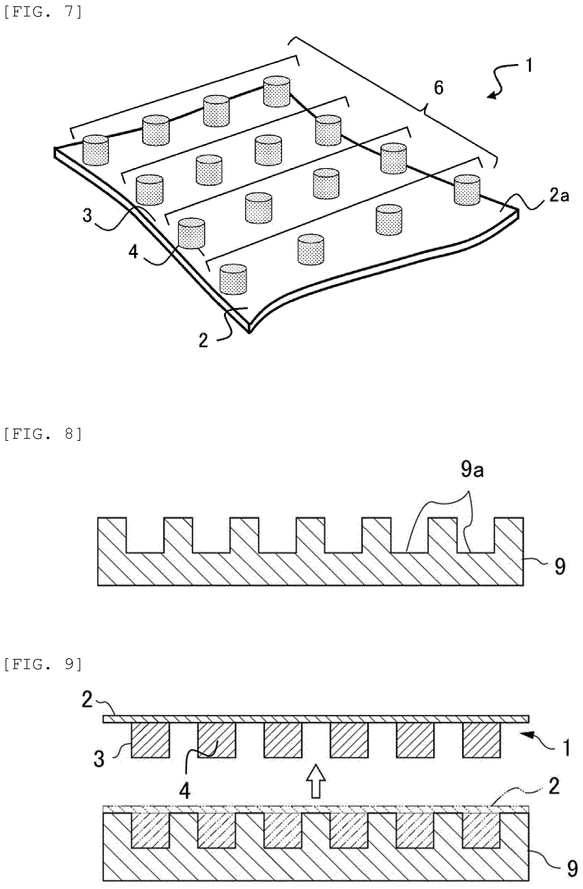

FIG. 8 illustrates a schematic cut end surface of a mold as an example used for molding a sound insulation sheet 1. A mold 9 illustrated has an upper surface on which concave portions corresponding to an outer shape of a convex structure of a sound insulation sheet 1, namely, a plurality of cavities (concave grooves) 9a, the surface of which is grooved in a shape corresponding to an outer shape of a line-shaped convex member 3 and a dot-shaped convex member 4, are formed.

The mold 9 can be used to mold a sound insulation sheet 1 according to the following procedure.

First, the mold 9 is set with the surface on which the cavities 9a are formed facing upward, a photo-curable resin is allowed to flow into and fill the cavities 9a, and a sheet member 2 made of a material through which a specified ray of light such as an ultraviolet ray or an electron beam capable of curing the photo-curable resin is transmitted is laminated thereon.

Next, the sheet member 2, which is pressed on the upper surface of the mold 9, is irradiated with the specified ray of light from above to thereby cure the photo-curable resin in the cavities 9a with the sheet member 2 being interposed so as to be fixed on the surface of the sheet member 2.

After the photo-curable resin is cured, as shown in FIG. 9, the sheet member 2 having the line-shaped convex member 3 and the dot-shaped convex member 4 fixed on the surface can be released from the mold 9 to thereby obtain a sound insulation sheet 1.

<Sound Transmission Loss>

The sound insulation characteristics of the sound insulation sheet 1 can be evaluated by measuring the sound transmission loss.

White noise is generated in one of the two spaces divided by the sound insulation sheet 1 as a boundary, and the sound transmission loss (TL) is determined from the difference between the sound pressure level ($L_{in}$) at a predetermined location in the space where the sound is generated (sound source room) and the sound pressure level ($L_{out}$) at a predetermined location in the other space (sound receiving room) at each center frequency in the 1/12-octave band from 72.8 to 10,900 Hz, based on the following formula (2) .

$$TL\left[dB\right] = L_{in} - L_{out} - 3 \qquad (2)$$

$L_{in}$; sound pressure level (dB) of sound source room
$L_{out}$; sound pressure level (dB) of sound receiving room
Incident sound; white noise (for example, the average sound pressure value in the frequency range of 72.8 to 10,900 Hz is approximately 0.94 Pa)
Distance between sample and microphone; 10 mm

Although it is required that, in the first sound insulation sheet 1 described above, at least two or more peaks (peak-shaped waveforms) be obtained in a graph obtained by measuring the sound transmission loss, with the horizontal axis of the frequency X and the vertical axis of ΔTL (dB) obtained by the following formula (1), it is preferred that this requirement be applied in other embodiments. It has been confirmed by the present inventors that no more than two peaks are observed in an embodiment in which the line-shaped convex member is arranged at each of both ends of the sheet member 2 and a plurality of the dot-shaped convex members 4 are arranged therebetween, and no other convex members are present.

$$\Delta TL = TL_1 - TL_2 \qquad (1),$$

wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

As long as the sound insulation sheet 1 can be placed without gaps along the outer periphery of the opening between the sound source room and the sound receiving room, the placement of the sound insulation sheet 1 with respect to the sound source is not particularly limited. The placement of the sound insulation sheet 1 when measuring the sound transmission loss is also not particularly limited; satisfying the above requirement for peaks means that at least one of the arbitrary placements may satisfy the above requirement, and as a placement where peaks are easily observed, the sound insulation sheet 1 is preferably placed without gaps along the outer periphery of the opening between the sound source room and the sound receiving room.

The height of each of the peaks in the graph obtained by measuring the sound transmission loss is, but not particularly limited to, preferably 3 dB or more, more preferably 5 dB or more, and even more preferably 15 dB or more, from the viewpoint of experiencing the noise reduction effect, and the upper limit thereof is, but not particularly limited to, usually 25 dB or less. The number of peaks satisfying the requirement is not particularly limited, but it is preferred that the requirement be satisfied by at least one of the above at least two peaks, more preferably by the above at least two peaks, from the viewpoint of exhibiting a high sound insulation effect beyond the mass law in different design frequency bands with a single sheet.

For two or more observed peaks, when the peak at the lowest frequency among the two or more peaks is defined as a first peak and the peak at the next lowest frequency after the first peak is defined as a second peak, the absolute value of the difference between ΔTL of the first peak and ΔTL of the second peak is, but not particularly limited to, usually 20 dB or less, preferably 15 dB or less, more preferably 10 dB or less, even more preferably 5 dB or less, and particularly preferably 3 dB or less, from the viewpoint of achieving a balanced sound insulation effect at multiple frequencies; and the lower limit thereof is, but not particularly limited to, usually 0 dB or more, and may be 1 dB or more.

<Sound Insulation Structure>

Another embodiment of the present invention relates to a sound insulation structure, in which the sound insulation sheet 1 described above is laminated to a sound absorbing material. As used herein, the sound insulation structure refers to a structure in which a sound insulation sheet 1 and a sound absorbing material are laminated.

FIG. 5 shows a sound insulation structure 7 including a sound insulation sheet 1 and a sound absorbing material 8 as an example of the sound insulation structure, but the present invention is not limited to this embodiment. The shape of the sound absorbing material 8 is not particularly limited as long as it can be provided to be laminated to the sound insulation sheet 1, but it is preferably sheet-shaped.

The sound insulation sheet 1 may be attached to the sound absorbing material 8 using an adhesive, glue, double-sided tape, or gummed tape, or may be physically fixed using a tacker or stapler. Moreover, they do not need to be fixed and may be in close contact with each other. The sound absorbing material 8 may be located on the surface 2a of the sheet member 2 where the convex members of the sound insulation sheet 1 are present, may be located on the surface 2b where no convex members are present as shown in FIG. 5, or may be located on both surfaces. Other materials, such as a sound insulation material and a nonflammable material, may be further laminated on the surface of the sound absorbing material 8 other than the laminated surface with the sound insulation sheet 1, depending on the application.

The sound absorbing material 8 is preferably made of materials that can be easily deformed and follow the vibrational displacement of the sheet member 2 from the viewpoint of not interfering with the vibration when it comes into contact with the sound insulation sheet 1.

Examples of the materials used include fiber-based sound absorbing materials made of glass wool, rock wool, felt, blankets, non-woven fabrics, fibrous polymers, or inorganic fibers; urethane, various rubbers, polymer forms such as polyethylene, polystyrene, or polypropylene, inorganic porous materials, metal foams or their pulverized products, and porous materials made by solidifying and molding fiber waste with various binders; and these can be used alone or in combination. Among these, non-woven fabrics, foams such as polymer or metal foams, glass wool, felt, or blankets are preferred from the viewpoint of obtaining a high sound insulation effect, and non-woven fabrics or foams are particularly preferred.

EXAMPLES

Hereinafter, the present invention is more specifically described with reference to Examples, but the present invention is not limited to the following Examples without departing from the gist thereof. The values of various conditions and evaluation results in Examples are represented as preferred ranges in the present invention, as in preferred ranges in the embodiments of the present invention. Such preferred ranges in the present invention can be determined in consideration of such preferred ranges in the embodiments and ranges represented by values in the following Examples or combinations of values in Examples.

[Example 1]

Raw materials, EBECRYL 230 (urethane acrylate manufactured by Daicel-Allnex Ltd., weight average molecular weight Mw: 5,000) / Aronix M-120 (special acrylate manufactured by Toagosei Co., Ltd.) / IRGACURE 184 (1-hydroxy-cyclohexyl-phenyl-ketone manufactured by BASF SE) / IRGACURE TPO (2,4,6-trimethylbenzoyl-diphenylphosphine oxide manufactured by BASF SE), were weighed at a mass ratio of 50 / 50 / 1 / 0.1, and stirred using Awatori Rentaro (AR-250 manufactured by Thinky Corp.) under the conditions of stirring for 20 minutes and defoaming for 10 minutes, thereby obtaining a mixture BL.

The method shown in FIGS. 8 and 9 was used to obtain a sound insulation sheet 1 having an arrangement shown in FIG. 1, i.e., an embodiment of one row of a line-shaped convex member and two rows of dot-shaped convex members arranged alternately.

Specifically, the mixture BL was poured into an A4-size rectangular mold 9 in which aluminum concave groove shapes (cavities) corresponding to the convex members of the sound insulation sheet 1 were arranged (in the mold 9, the longitudinal direction of the row was the transverse direction of the sheet member 2), a PET film having a transverse direction length of 250 mm, a longitudinal direction length of 340 mm, a thickness of 250 um, a Young's modulus at 25°C of 5 GPa, a specific gravity of 1.2, and a surface density of 0.3 kg/m$^2$ was then laminated as a material of the sheet member 2 on the mold 9, and the mixture BL was cured by irradiation with an ultraviolet ray having a wavelength of 200 to 450 nm and an energy amount of 1,000 mJ/m$^2$ using a high-pressure mercury lamp 21, thereby molding a sound insulation sheet 1. Thereafter, the sound insulation sheet 1 cured in the mold 9 was released from the mold 9.

The resulting sound insulation sheet 1 had a form in which a thin film having a thickness of 0.05 mm formed by curing the mixture BL was laminated on the PET film having a thickness of 250 um, and further on the film, line-shaped convex row structures 5 each composed of a line-shaped convex member 3 having a width of 6 mm, a height of 5 mm, and a length of 210 mm were arranged at a pitch of 90 mm, and two rows of dot-shaped convex row structures 6 formed by linearly arranging dot-shaped convex members 4 each having a diameter of 6 mm and a height of 5 mm at a pitch of 30 mm were arranged between the line-shaped convex row structures 5 such that the distance between the center line of each of the dot-shaped convex row structures 6 and the center of each of the line-shaped convex row structures 5 was 30 mm. On the sheet member 2, a plurality of line segments were drawn at arbitrary points in the transverse direction of the sheet member 2, and each convex row was arranged such that the center of the line-shaped convex row and the center of the dot-shaped convex row were present on a straight line formed by connecting the midpoints of these line segments. In other words, the present form had convex members formed in an area of 210 mm × 297 mm located in the center of the PET film having a size of 250 mm × 340 mm.

The number of the line-shaped and dot-shaped convex rows was such that the total number of the convex rows that fit within the A4 area of 297 mm in the longitudinal direction at the specified pitch between the convex rows was the maximum, and these convex rows were positioned in the longitudinal direction of the sheet so as to be line-symmetrical on the sheet member 2 with the straight line formed by connecting the midpoints of a plurality of line segments drawn at arbitrary points in the longitudinal direction of the sheet member 2.

The number of the dot-shaped convex members 4 in the dot-shaped convex row was the maximum number that fit within the A4 area of 210 mm in the transverse direction at the specified pitch between the convex rows, and the dot-shaped convex members 4 were positioned on the sheet member 2 such that the center of the dot-shaped convex row was present on a straight line formed by connecting the midpoints of a plurality of line segments drawn at arbitrary points in the transverse direction of the sheet member 2; and the line-shaped convex row was positioned in the transverse direction of the sheet such that the center of the line-shaped convex row was present on a straight line formed by connecting the midpoints of a plurality of line segments drawn at arbitrary points in the transverse direction of the sheet member 2. The number and positioning method of these convex members are similarly applied to the following Examples and Comparative Examples.

The above-mentioned thin film having a thickness of 0.05 mm is a part of the sheet member 2. However, the thin film has a very small surface density compared to that of the above-mentioned PET film, so that the Young's modulus, specific gravity, and surface density of the PET film can be adopted as those of the sheet member 2, and the effect of the presence or absence of the thin film on the sound insulation performance is very small. This is also similarly applied to the following Examples and Comparative Examples.

[Example 2]

A sound insulation sheet 1 was molded in the same manner as in Example 1, except that the mold 9 capable of obtaining the sound insulation sheet 1 having the shape shown in FIG. 1 was changed to a mold 9 capable of obtaining a sound insulation sheet 1 having an arrangement shown in FIG. 2, i.e., an embodiment of one line-shaped convex row and one cylindrical dot-shaped convex row arranged alternately.

The resulting sound insulation sheet 1 had a form in which a thin film having a thickness of 0.05 mm formed by curing the mixture BL was laminated on a PET substrate having a thickness of 125 um, and further on the film, line-shaped convex row structures 5 each composed of a line-shaped convex member 3 having a width of 6 mm and a height of 5 mm were arranged at a pitch of 30 mm, and one row of dot-shaped convex row structures 6 formed by linearly arranging dot-shaped convex members 4 each having a diameter of 6 mm and a height of 5 mm at a pitch of 15 mm was arranged between the line-shaped convex row structures 5 such that the distance from the line-shaped convex row structures 5 was 15 mm.

[Example 3]

A sound insulation sheet 1 in Example 3 was a sound insulation sheet 1 having an arrangement shown in FIG. 3, i.e., an embodiment of one line-shaped convex row and one prismatic dot-shaped convex row arranged alternately; and had a form in which line-shaped convex row structures 5 each composed of a prismatic line-shaped convex member 3 having a width of 6 mm, a height of 10 mm, and a length of 210 mm cut from an acrylic plate were fixed on a surface 2a of a PET substrate (sheet member) having a thickness of 250 um using an adhesive at a pitch of 42 mm, and one row of dot-shaped convex row structures 6 formed by linearly arranging prismatic dot-shaped convex members 4 each having a width of 7.1 mm and a height of 6 mm cut from an acrylic plate at a pitch of 38 mm was arranged between the line-shaped convex row structures 5 such that the distance between the center line of each of the dot-shaped convex row structures 6 and the center line of each of the line-shaped convex row structures 5 was 21 mm.

[Example 4]

A sound insulation sheet 1 was molded in the same manner as in Example 1, except that the mold 9 capable of obtaining the sound insulation sheet 1 having the shape shown in FIG. 1 was changed to a mold 9 capable of obtaining a sound insulation sheet 1 having an arrangement shown in FIG. 5, i.e., an embodiment of one line-shaped convex row and one cylindrical dot-shaped convex row arranged alternately.

The resulting sound insulation sheet 1 had a form in which a thin film having a thickness of 0.05 mm formed by curing the mixture BL was laminated on a PET substrate having a thickness of 125 um, and further on the film, line-shaped convex row structures 5 each composed of a line-shaped convex member 3 having a width of 6 mm and a height of 5 mm were arranged at a pitch of 35 mm, and one row of dot-shaped convex row structures 6 formed by linearly arranging dot-shaped convex members 4 each having a diameter of 6 mm and a height of 5 mm at a pitch of 35 mm was arranged between the line-shaped convex row structures 5 such that the distance between the center line of each of the dot-shaped convex row structures 6 and the center line of each of the line-shaped convex row structures 5 was 17.5 mm. Each side portion of the sound insulation sheet 1 was attached to the surface of a sound absorbing material 8 made of ultrafine acrylic fiber XAI (registered trademark) (basis weight of 360 g/m$^2$, thickness of 25 mm) using double-sided tape, thereby producing a sound insulation structure 7 substantially similar to that shown in FIG. 5.

[Comparative Example 1]

A sound insulation sheet 1 was molded in the same manner as in Example 1, except that the mold 9 capable of obtaining the sound insulation sheet 1 having the shape shown in FIG. 1 was changed to a mold 9 capable of obtaining a sound insulation sheet 1 having an arrangement shown in FIG. 6, i.e., an embodiment in which only line-shaped convex members 3 were arranged as the convex members.

The resulting sound insulation sheet 1 had a form in which a thin film having a thickness of 0.05 mm formed by curing the mixture BL was laminated on a PET substrate having a thickness of 250 um, and further only line-shaped convex row structures 5 each composed of a line-shaped convex member 3 having a width of 6 mm and a height of 5 mm were arranged on the film at a pitch of 30 mm.

[Comparative Example 2]

A sound insulation sheet 1 was molded in the same manner as in Example 1, except that the mold 9 capable of obtaining the sound insulation sheet 1 having the shape shown in FIG. 1 was changed to a mold 9 capable of obtaining a sound insulation sheet 1 having an arrangement shown in FIG. 7, i.e., an embodiment in which only cylindrical dot-shaped convex members 4 were arranged as the convex members.

The resulting sound insulation sheet 1 had a form in which a thin film having a thickness of 0.05 mm formed by curing the mixture BL was laminated on a PET substrate having a thickness of 250 um, and further only dot-shaped convex row structures 6 composed of dot-shaped convex members 4 each having a diameter of 6 mm and a height of 5 mm were arranged on the film at a pitch of 30 mm.

[Sound Transmission Loss Measurement]

The sound insulation sheets 1 and the sound insulation structure 7 produced in Examples 1 to 4 and Comparative Examples 1 to 2 were used to measure the sound transmission loss.

The measurements were performed in an arrangement where the surface with the concavo-convex structure was oriented toward the sound receiving room. In each of Examples and Comparative Examples, the measured value of the sound transmission loss when the sound insulation sheet 1 was replaced with a flat sheet having no concavo-convex structure and having the same mass as that of the sound insulation sheet 1 and the same area as that of the sheet member 2 was determined as a value in the case of the mass law. Then, the difference was calculated by subtracting the sound transmission loss in the case of the mass law from the sound transmission loss of the sound insulation sheet 1 used. The frequency of the peak (frequency at the maximum value of the peak) observed in the graph with the horizontal axis of the frequency X and the vertical axis of the $\Delta$TL (dB) obtained by the following formula (1), and the $\Delta$TL at the frequency ("Difference from mass law of transmission loss at sound insulation frequency" in Table 1) were summarized in Table 1. In Examples 1 to 4, two differences were described in Table 1 because two peaks with peak heights of 3 dB or more were observed.

$$\Delta TL = TL_1 - TL_2 \qquad (1),$$

wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

The measurement conditions for the sound transmission loss were as follows.

White noise was generated in one of the two spaces divided by the sound insulation sheet 1 or the sound insulation structure 7 produced in each of Examples 1 to 4 and Comparative Examples 1 to 2 as a boundary, and the sound transmission loss (TL) was determined from the difference between the sound pressure level ($L_{in}$) at a predetermined location in the space where the sound was generated (sound source room) and the sound pressure level ($L_{out}$) at a predetermined location in the other space (sound receiving room) at each center frequency in the 1/12-octave band from 72.8 to 10,900 Hz, based on the following formula (2).

$$TL\left[dB\right] = L_{in} - L_{out} - 3 \qquad (2)$$

$L_{in}$; sound pressure level (dB) of sound source room
$L_{out}$; sound pressure level (dB) of sound receiving room
Incident sound; white noise (the average sound pressure value in the frequency range of 72.8 to 10,900 Hz was 0.94 Pa)
Distance between sample and microphone; 10 mm

[Simulation]

[Example 5]

A unit cell model having a shape substantially similar to that shown in FIG. 2, in which line-shaped convex row structures 5 and dot-shaped convex row structures 6 were arranged parallel to each other and alternately on a sheet member 2a, and line-shaped convex rows and dot-shaped convex rows were always arranged at equal intervals in one direction, was reproduced on simulation software COMSOL Multiphysics (registered trademark) to construct an infinite plane model to which periodic boundary conditions were applied. The sheet member 2 was made of PET, with a density of 1,200 $kg/m^2$, an elastic modulus of 5 GPa, a Poisson's ratio of 0.39, a loss coefficient of 0.1, and a thickness of 250 um. A thin film made of a photo-curable resin having a thickness of 0.05 mm was present on the surface of the sheet member 2 on which the convex members were arranged, the convex members made of a photo-curable resin were arranged thereon, and the photo-curable resin had a density of 1,050 $kg/m^2$, a Poisson's ratio of 0.49, and a loss coefficient of 0.1. The elastic modulus of the photo-curable resin was calculated by the following formula (3).

$$E\,(\text{Pa}) = 10^{\,0.5513\log_{10}(f+5.6991)} \qquad (3)$$

E; photo-curable resin elastic modulus (Pa)
f; frequency (Hz)

A plane wave with a sound pressure of 1 Pa was incident from the surface 2a side of the sheet member 2 of each of shape models 1 to 20 listed in Table 2, which were created on the simulation software in Example 5, and the sound transmission loss was calculated by coupled acoustic structure calculation using the finite element method. In this case, the sound transmission loss simulations were performed for each of the shape models 1 to 20 listed in Table 2, where the width of the line-shaped convex member 3 was W, the height thereof was hl, the pitch of the line-shaped convex row structures 5 was pl, the diameter of each of the dot-shaped convex members 4 was φ, the height thereof was hd, the pitch of the dot-shaped convex members in each of the dot-shaped convex row structures 6 was pd, and the thickness of the sheet member 2 was T.

The results were compared and evaluated with a mass law value of a flat sheet having no concavo-convex structure and having the same mass as that of the sound insulation sheet 1 in each shape and the same area as that of the sheet member 2. Specifically, the difference was calculated by subtracting the mass law value from the sound transmission loss of the sound insulation sheet 1 used, and a graph was created with the frequency X on the horizontal axis and the ΔTL (dB) obtained by the formula (2) on the vertical axis.

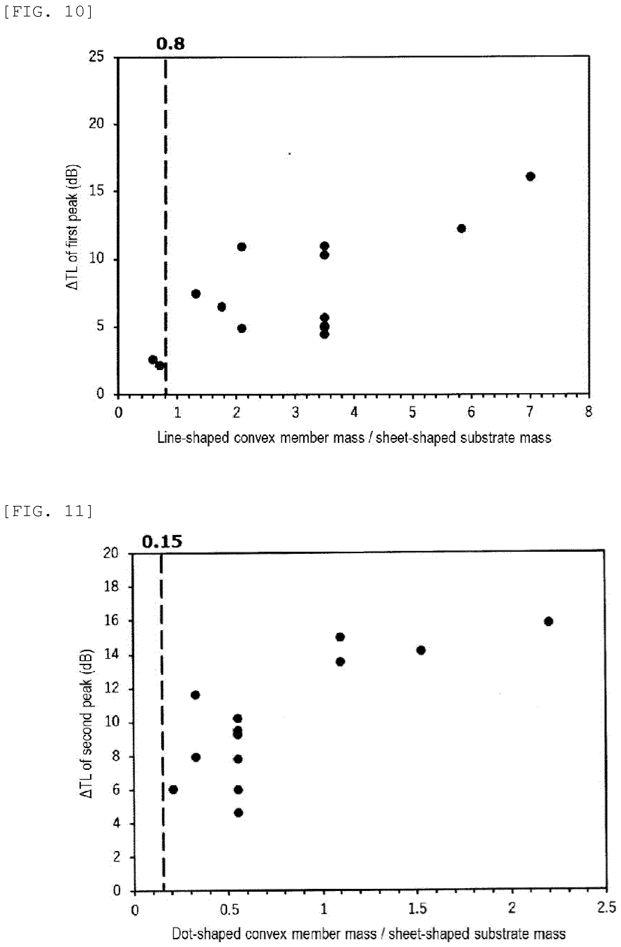

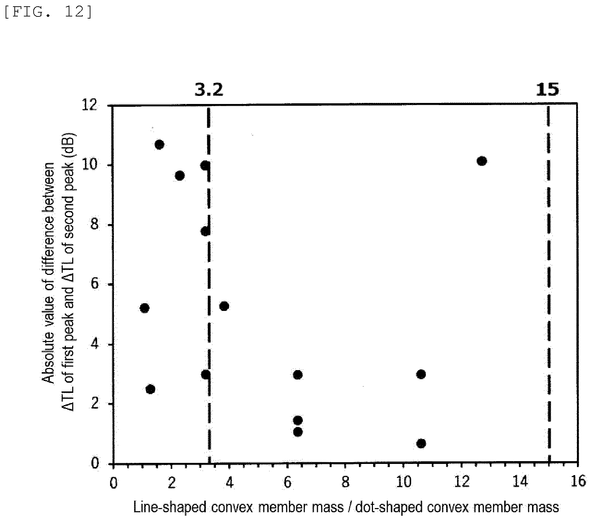

As a result, two or more peaks were observed in all shape models. Among these two or more peaks, the peak at the lowest frequency is referred to as a first peak, and the peak at the next lowest frequency after the first peak is referred to as a second peak. FIG. 10 shows a graph plotting the ΔTL of the first peak (the maximum value of the first peak) on the vertical axis and the mass ratio of the line-shaped convex members 3/sheet member 2 on the horizontal axis; FIG. 11 shows a graph plotting the ΔTL of the second peak (the maximum value of the second peak) on the vertical axis and the mass ratio of the dot-shaped convex members 4/sheet member 2 on the horizontal axis; and FIG. 12 shows a graph plotting the absolute value of the difference between ΔTL of the first peak and ΔTL of the second peak on the vertical axis and the mass ratio of the line-shaped convex members 3/dot-shaped convex members 4 on the horizontal axis. In FIG. 12, values of ΔTL for the first peak less than 3 dB are excluded from the plot.

[Table 1]

| | Example 1 | Example 2 | Example 3 | Example 4 | Comparative Example 1 | Comparative Example 2 |
|---|---|---|---|---|---|---|
| Shape of dot-shaped convex member | cylindrical | cylindrical | prismatic | cylindrical | - | cylindrical |
| Diameter/width of dot-shaped convex member (mm) | 6 | 6 | 7.1 | 6 | - | 6 |
| Height of dot-shaped convex member (mm) | 5 | 5 | 6 | 5 | - | 5 |
| Distance between convex members in dot-shaped convex member row (mm) | 30 | 15 | 38 | 35 | - | 30 |
| Material of dot-shaped convex member | photo-curable resin | photo-curable resin | acrylic resin | photo-curable resin | photo-curable resin | photo-curable resin |
| Shape of line-shaped convex member | prismatic | prismatic | prismatic | prismatic | prismatic | - |
| Width of line-shaped convex member (mm) | 6 | 6 | 6 | 6 | 6 | - |
| Height of line-shaped convex member (mm) | 5 | 5 | 10 | 5 | 5 | - |
| Distance between line-shaped convex members (mm) | 90 | 30 | 42 | 35 | 30 | - |
| Material of line-shaped convex member | photo-curable resin | photo-curable resin | acrylic resin | photo-curable resin | photo-curable resin | photo-curable resin |
| Thickness of sheet-shaped substrate (mm) | 0.25 | 0.125 | 0.25 | 0.125 | 0.25 | 0.25 |
| Material of sheet-shaped substrate (mm) | PET | PET | PET | PET | PET | PET |
| Sound absorbing material | non | non | non | XAI (0.36 kg/m$^2$, 25 mmt) | non | non |
| Sound insulation frequency (Hz) | 109 Hz 487 Hz | 205 Hz 728 Hz | 244 Hz 546 Hz | 145 Hz 274 Hz | 516 Hz | 917 Hz |
| Difference from mass law of transmission loss at sound insulation frequency (dB) | 3.79 dB (109 Hz) 8.59 dB (487 Hz) | 8.95 dB (205 Hz) 13.72 dB (728 Hz) | 13.45 dB (244 Hz) 11.70 dB (546 Hz) | 8.67 dB (145 Hz) 4.56 dB (274 Hz) | 13.58 dB (516 Hz) | 9.19 dB (917 Hz) |

[Table 2]

| | W (mm) | hl mm) | pl (mm) | Φ (mm) | hd (mm) | pd (mm) | T (mm) | Line-shaped convex member mass / sheet-shaped substrate mass | Dot-shaped convex member mass / sheet-shaped substrate mass | Line-shaped convex member mass / dot-shaped convex member mass |
|---|---|---|---|---|---|---|---|---|---|---|
| Shape 1 | 6 | 1 | 30 | 6 | 5 | 30 | 0.25 | 0.70 | 0.55 | 1.27 |
| Shape 2 | 6 | 3 | 30 | 6 | 5 | 30 | 0.25 | 2.10 | 0.55 | 3.82 |
| Shape 3 | 6 | 5 | 30 | 6 | 5 | 30 | 0.25 | 3.50 | 0.55 | 6.37 |
| Shape 4 | 6 | 10 | 30 | 6 | 5 | 30 | 0.25 | 7.00 | 0.55 | 12.73 |
| Shape 5 | 1 | 5 | 30 | 6 | 5 | 30 | 0.25 | 0.58 | 0.55 | 1.06 |
| Shape 6 | 3 | 5 | 30 | 6 | 5 | 30 | 0.25 | 1.75 | 0.55 | 3.18 |
| Shape 7 | 10 | 5 | 30 | 6 | 5 | 30 | 0.25 | 5.83 | 0.55 | 10.61 |
| Shape 8 | 6 | 5 | 30 | 6 | 10 | 30 | 0.25 | 3.50 | 1.10 | 3.18 |
| Shape 9 | 6 | 5 | 30 | 6 | 20 | 30 | 0.25 | 3.50 | 2.20 | 1.59 |
| Shape 10 | 6 | 5 | 30 | 10 | 5 | 30 | 0.25 | 3.50 | 1.53 | 2.29 |
| Shape 11 | 6 | 5 | 50 | 6 | 5 | 30 | 0.25 | 2.10 | 0.33 | 6.37 |
| Shape 12 | 6 | 5 | 80 | 6 | 5 | 30 | 0.25 | 1.31 | 0.21 | 6.37 |
| Shape 13 | 6 | 5 | 30 | 6 | 5 | 15 | 0.25 | 3.50 | 1.10 | 3.18 |
| Shape 14 | 6 | 5 | 30 | 6 | 5 | 50 | 0.25 | 3.50 | 0.33 | 10.61 |

As shown in Examples 1 to 4 in Table 1 described above, the sound insulation sheets 1 having the line-shaped convex row structures 5 and the dot-shaped convex row structures 6 had a transmission loss beyond the mass law in different frequency band sound waves.

On the other hand, as shown in Comparative Examples 1 to 2 in Table 1, the sound insulation sheet 1 having only the line-shaped convex row structures 5 and the sound insulation sheet 1 having only the dot-shaped convex row structures 6 exhibited a sound insulation effect beyond the mass law only in one frequency band.

Therefore, it has been shown that the shape in which both the line-shaped convex row structures 5 and the dot-shaped convex row structures 6 are arranged is essential for designing a sound insulation sheet 1 that exhibits sound insulation effects in multiple frequency bands.

Furthermore, from the simulation results shown in FIGS. 10 and 11, it is found that in designing the sound insulation sheet 1 capable of insulating sound in multiple frequency bands, the first peak is likely to appear when the mass ratio of the line-shaped convex members 3 to the sheet member 2 is 0.8 or more, and the second peak is likely to appear when the mass ratio of the dot-shaped convex members 4 to the sheet member 2 is 0.15 or more. As shown in FIG. 12, it is also found that when the mass ratio of the line-shaped convex members 3 to the dot-shaped convex members 4 is in the range of 3.2 to 15, both of the different sound insulation peaks are likely to have transmission loss values beyond the mass law.

[Example 6]

A unit cell model having a shape substantially similar to that shown in FIG. 4, in which first line-shaped convex row structures 5a and second line-shaped convex row structures 5b different from the first line-shaped convex row structures 5a were arranged parallel to each other and alternately on a surface 2a of a sheet member 2, and first line-shaped convex rows 3a and second line-shaped convex rows 3b were always arranged at equal intervals in one direction, was reproduced on simulation software COMSOL Multiphysics (registered trademark) to construct an infinite plane model to which periodic boundary conditions were applied.

Specifically, the sound insulation sheet 1 in Example 6 had a form in which, on a sheet member 2, first line-shaped convex row structures 5a each composed of a first line-shaped convex member 3a having a width of 10 mm and a height of 10 mm were arranged with a distance between the center lines of 60 mm, one row of second line-shaped convex row structures 5b formed by linearly arranging second line-shaped convex members 3b each having a width of 5 mm, a height of 8 mm, and a length of 285mm at a pitch of 330 mm was arranged between the first line-shaped convex row structures 5a, and the distance between the center line of each of the first line-shaped convex row structures 5a and the center line of each of the second line-shaped convex row structures 5b was 30 mm. The sheet member 2 was made of PET, with a density of 1,200 kg/m$^2$, an elastic modulus of 5 GPa, a Poisson's ratio of 0.39, a loss coefficient of 0.1, and a thickness of 250 um. The convex members arranged on the sheet member 2 were made of polymethyl methacrylate, with a density of 1,180 kg/m$^2$, an elastic modulus of 3 GPa, a Poisson's ratio of 0.39, and a loss coefficient of 0.1.

[Example 7]

A sound insulation sheet 1 in Example 7 was a sound insulation sheet 1 having an arrangement shown in FIG. 4, i.e., an embodiment in which first line-shaped convex row structures 5a and second line-shaped convex row structures 5b different from the first line-shaped convex row structures 5a were arranged parallel to each other and alternately on a surface 2a of a sheet member 2, and first line-shaped convex rows 3a and second line-shaped convex rows 3b were always arranged at equal intervals in one direction; and specifically had a form in which, on a PET film having a transverse direction length of 1,000 mm, a longitudinal direction length of 1,000 mm, a thickness of 250 um, a Young's modulus at 25°C of 5 GPa, a specific gravity of 1.2, and a surface density of 0.3 kg/m$^2$, first line-shaped convex row structures 5a were each formed by fixing a first line-shaped convex member 3a having a width of 10 mm, a height of 10 mm, and a length of 900 mm cut from an acrylic plate on a surface 2a of the substrate (sheet member) using an adhesive at a pitch of 60 mm, second line-shaped convex row structures 5b were each formed by linearly fixing second line-shaped convex members 3b each having a width of 5 mm, a height of 8 mm, and a length of 267 mm cut from an acrylic plate between the first line-shaped convex row structures 5a on the surface 2a of the substrate (sheet member) using an adhesive at a pitch of 310 mm, and the distance between the center line of each of the first line-shaped convex row structures 5a and the center line of each of the second line-shaped convex row structures 5b was 30 mm.

Each convex row was arranged on the sheet member 2 such that the center of each of the first line-shaped convex rows and the center of each of the second line-shaped convex rows were present on a straight line formed by connecting the midpoints of a plurality of line segments drawn at arbitrary points in the transverse direction of the sheet member 2. In other words, the present form had convex members formed in an area of 900 mm × 900 mm located in the center of the PET film having a size of 1,000 mm × 1,000 mm.

[Sound Transmission Loss Measurement]

The sound transmission loss of the sound insulation sheet in Example 6 was evaluated by simulation.
In addition, the sound insulation sheet 1 produced in Example 7 was used to measure the sound transmission loss in the same manner as the sound insulation sheets 1 or the sound insulation structure 7 produced in Examples 1 to 4 and Comparative Examples 1 to 2.
The measurements were performed as follows: white noise was generated in one of the two spaces divided by the sound insulation sheet 1 as a boundary, and the sound transmission loss (TL) was determined from the difference between the sound pressure level ($L_{in}$) at a predetermined location in the space where the sound was generated (sound source room) and the sound pressure level ($L_{out}$) at a predetermined location in the other space (sound receiving room) at each center frequency in the 1/3-octave band from 100 to 10,000 Hz, based on the formula (2).

The results of the evaluations and measurements are shown in Table 3.

[Table 3]

| | Example 6 | Example 7 |
|---|---|---|
| Width of line-shaped convex member 7 (mm) | 5 | 5 |
| Height of line-shaped convex member 7 (mm) | 8 | 8 |
| Length of line-shaped convex member 7 (mm) | 270 | 267 |
| Distance between convex members in line-shaped convex member row structure 8 (mm) | 330 | 310 |
| Material of line-shaped convex member 7 | acrylic resin | acrylic resin |
| Width of line-shaped convex member 3 (mm) | 10 | 10 |
| Height of line-shaped convex member 3 (mm) | 10 | 10 |
| Distance between line-shaped convex member rows 3 (mm) | 60 | 60 |
| Material of line-shaped convex member 3 | acrylic resin | acrylic resin |
| Thickness of sheet-shaped substrate (mm) | 0.25 | 0.25 |
| Material of sheet-shaped substrate | PET | PET |
| Sound absorbing material | non | non |
| Evaluation method | simulation | sound transmission loss measurement |
| Sound insulation frequency (Hz) | 100 Hz<br>236 Hz<br>335 Hz<br>630 Hz | 100 Hz<br>160 Hz<br>250 Hz |
| Difference from mass law of transmission loss at sound insulation frequency (dB) | 10.6 dB (100 Hz)<br>9.05 dB (236 Hz)<br>11.7 dB (335 Hz)<br>9.00 dB (630 Hz) | 7.23 dB (100 Hz)<br><br>5.15dB (160 Hz)<br><br>3.00dB (250 Hz) |

As shown in Table 3, the number of sound insulation peaks at frequencies of 800 Hz or less increased from two to three or four by changing from the dot-shaped convex member 4 to the second line-shaped convex member 3b. It has been found that by adjusting the shape of the protrusions, high sound insulation performance can be exhibited over a wide range of low-frequency noise, which is generally difficult to reduce noise with sound absorbing materials or lightweight sound insulation boards.

EXPLANATIONS OF LETTERS OR NUMERALS

1    Sound insulation sheet
2    Sheet member
2a    Surface of sheet member

2b    Surface of sheet member
3     Line-shaped convex member
3a    First line-shaped convex member
3b    Second line-shaped convex member
4     Dot-shaped convex member
5     Line-shaped convex member row structure
5a    First line-shaped convex member row structure
5b    Second line-shaped convex member row structure
6     Dot-shaped convex member row structure
7     Sound insulation structure
8     Sound absorbing material
9     Mold
9a    Cavity

**Claims**

1.  A sound insulation sheet, comprising a sheet member and convex members,

    the sound insulation sheet having at least a convex member A and a convex member B different in shape from each other as the convex members,
    the sound insulation sheet having two or more convex regions each having the convex member A present on one surface of the sheet member and
    two or more convex regions each having the convex member B present on one surface of the sheet member, wherein at least two peaks are obtained in a graph obtained by measuring a sound transmission loss, with the horizontal axis of a frequency X and the vertical axis of $\Delta$TL (dB) obtained by the following formula (1), and at least two of these peaks each have a height of 3 dB or more;

    $$\Delta TL \ = \ TL_1 \ - \ TL_2 \qquad (1),$$

    wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

2.  The sound insulation sheet according to claim 1, wherein the convex member A comprises a line-shaped convex member.

3.  The sound insulation sheet according to claim 1 or 2, wherein the convex member B is present in a plurality in each of the convex regions B, and the convex member B comprises a dot-shaped convex member.

4.  A sound insulation sheet, comprising a sheet member and convex members,

    the sound insulation sheet having at least a line-shaped convex member and a plurality of dot-shaped convex members as the convex members,
    the sound insulation sheet having two or more convex regions each having the line-shaped convex member present on one surface of the sheet member and
    two or more convex regions each having a plurality of the dot-shaped convex members present on one surface of the sheet member.

5.  The sound insulation sheet according to any one of claims 2 to 4, having a row structure composed of one or more rows of the dot-shaped convex members arranged in each of the convex regions where a plurality of the dot-shaped convex members are present, wherein a longitudinal direction of the row structure is substantially parallel to a longitudinal direction of a row structure composed of the line-shaped convex member.

6.  The sound insulation sheet according to claim 5, wherein the row structure composed of the line-shaped convex member and the row structure composed of the dot-shaped convex members are arranged alternately in a plan view.

7. The sound insulation sheet according to claim 5, wherein the row structure composed of the line-shaped convex member and the row structure composed of the dot-shaped convex members are arranged alternately and at equal intervals in a plan view.

8. The sound insulation sheet according to any one of claims 5 to 7, wherein the dot-shaped convex members in the row structure are arranged at equal intervals.

9. The sound insulation sheet according to any one of claims 2 to 8, having

a value calculated by (a total mass of the line-shaped convex members / a mass of the sheet member) of 0.8 or more,
a value calculated by (a total mass of the dot-shaped convex members / a mass of the sheet member) of 0.15 or more, and
a value calculated by (a total mass of the line-shaped convex members / a total mass of the dot-shaped convex members) of 3.5 or more and 15 or less.

10. The sound insulation sheet according to any one of claims 3 to 9, wherein the dot-shaped convex members are each cylindrical in shape.

11. The sound insulation sheet according to any one of claims 3 to 9, wherein the dot-shaped convex members are each prismatic in shape.

12. The sound insulation sheet according to claim 2 or 4,

wherein the convex member B comprises a line-shaped convex member having a different length from that of the line-shaped convex member A, and
a plurality of the convex members B, which are line-shaped convex members, are arranged in series in each of the convex regions where the convex members B are present.

13. The sound insulation sheet according to any one of claims 4 to 12, wherein at least two peaks are obtained in a graph obtained by measuring a sound transmission loss, with the horizontal axis of a frequency X and the vertical axis of $\Delta$TL (dB) obtained by the following formula (1), and at least two of these peaks each have a height of 3 dB or more;

$$\Delta TL = TL_1 - TL_2 \qquad (1),$$

wherein $TL_1$ represents a sound transmission loss (dB) of the sound insulation sheet at the frequency X, and $TL_2$ represents a sound transmission loss (dB) of a flat sheet having no concavo-convex structure and having the same mass as that of the sound insulation sheet and the same area as that of the sheet member at the frequency X.

14. The sound insulation sheet according to any one of claims 1 to 13, wherein the convex members each comprise at least one selected from the group consisting of a photo-curable resin and a thermoplastic resin.

15. A sound insulation sheet, comprising a sheet member and convex members,

the sound insulation sheet having a plurality of line-shaped convex members A and a plurality of convex members B that are different in shape from the line-shaped convex members A as the convex members,
wherein at least one of the line-shaped convex members A is arranged between a plurality of the convex members B, and
at least one of the convex members B is arranged between a plurality of the line-shaped convex members A.

16. The sound insulation sheet according to claim 15, wherein the convex members B each comprise a convex member having a shape with no sides longer than a length in a longitudinal direction of each of the line-shaped convex members A.

17. The sound insulation sheet according to claim 15 or 16, having

a value calculated by (a total mass of the line-shaped convex members A / a mass of the sheet member) of 0.8 or more, and

a value calculated by (a total mass of the convex members B / a mass of the sheet member) of 0.15 or more.

18. The sound insulation sheet according to claim 17, wherein the convex members B each comprise a convex member having a shape with no sides longer than a length in a longitudinal direction of each of the line-shaped convex members A in a plan view.

19. The sound insulation sheet according to claim 18, wherein the convex members B form a plurality of row structures each composed of a plurality of the convex members B linearly aligned, and the row structures are substantially parallel to a longitudinal direction of each of the line-shaped convex members A.

20. The sound insulation sheet according to claim 19, wherein the row structures each composed of a plurality of the convex members B and the line-shaped convex members A are arranged alternately in a plan view.

21. The sound insulation sheet according to claim 20, wherein the convex members B each comprise a dot-shaped convex member.

22. The sound insulation sheet according to claim 21, having a value calculated by (a total mass of the line-shaped convex members A / a total mass of the dot-shaped convex members B) of 3.2 or more and 15 or less.

23. The sound insulation sheet according to claim 22, having a value calculated by (a total mass of the line-shaped convex members A / a total mass of the dot-shaped convex members B) of 3.5 or more and 15 or less.

24. The sound insulation sheet according to claim 20, wherein the convex members B each comprise a line-shaped convex member shorter than each of the line-shaped convex members A.

25. The sound insulation sheet according to claim 24, wherein the convex members B form a plurality of row structures each composed of a plurality of the convex members B linearly aligned along the longitudinal direction.

26. The sound insulation sheet according to claim 25,

wherein when the line-shaped convex member A is defined as a "first line-shaped convex member" and the line-shaped convex member B shorter than the line-shaped convex member A is defined as a "second line-shaped convex member",
the sound insulation sheet has a length ratio of the line-shaped convex member B to the line-shaped convex member A, which is calculated by (the first line-shaped convex member) / (the second line-shaped convex member), in a range of 0.1 to 0.99.

27. A sound insulation structure, comprising the sound insulation sheet according to any one of claims 1 to 26 laminated to a sound absorbing material.

[FIG. 1]

[FIG. 2]

[FIG. 3]

EP 4 411 724 A1

[FIG. 4]

[FIG. 5]

[FIG. 6]

[FIG. 7]

[FIG. 8]

[FIG. 9]

[FIG. 10]

[FIG. 11]

[FIG. 12]

# EP 4 411 724 A1

| INTERNATIONAL SEARCH REPORT | International application No. |
|---|---|
| | **PCT/JP2022/036444** |

**A.    CLASSIFICATION OF SUBJECT MATTER**

*G10K 11/16*(2006.01)i; *B32B 3/14*(2006.01)i; *B32B 3/30*(2006.01)i; *B60R 13/08*(2006.01)i; *E04B 1/82*(2006.01)i; *E04B 1/86*(2006.01)i; *G10K 11/162*(2006.01)i
FI:    G10K11/16 120; B32B3/14; B32B3/30; B60R13/08; E04B1/82 B; E04B1/82 H; E04B1/86 G; G10K11/162

According to International Patent Classification (IPC) or to both national classification and IPC

**B.    FIELDS SEARCHED**

Minimum documentation searched (classification system followed by classification symbols)
G10K11/16; B32B3/14; B32B3/30; B60R13/08; E04B1/82; E04B1/86; G10K11/162

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 4-69229 A (DATACARD JAPAN LTD.) 04 March 1992 (1992-03-04) page 2, lower left column, line 4 to page 3, upper left column, line 14, fig. 1-3 | 15-16, 27 |
| A | | 1-14, 17-26 |
| A | JP 10-140702 A (SEKISUI CHEMICAL CO., LTD.) 26 May 1998 (1998-05-26) entire text, all drawings | 1-27 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/036444**

| Patent document cited in search report | | | Publication date (day/month/year) | Patent family member(s) | Publication date (day/month/year) |
|---|---|---|---|---|---|
| JP | 4-69229 | A | 04 March 1992 | (Family: none) | |
| JP | 10-140702 | A | 26 May 1998 | (Family: none) | |

Form PCT/ISA/210 (patent family annex) (January 2015)

**REFERENCES CITED IN THE DESCRIPTION**

**Patent documents cited in the description**

- JP 2013231316 A
- JP 2017227109 A
- WO 2017135409 A
- JP 2000265593 A
- JP 2019208727 A